(19) **Europäisches Patentamt / European Patent Office / Office européen des brevets**

(11) **EP 2 960 006 B1**

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(51) Int Cl.:
*B23K 26/14* (2014.01)   *B05B 12/00* (2018.01)
*B26F 1/26* (2006.01)   *B26F 3/00* (2006.01)

(21) Anmeldenummer: **14405052.3**

(22) Anmeldetag: **23.06.2014**

(54) **Verfahren und Vorrichtung zum Bestimmen einer Lage eines Flüssigkeitsstrahls durch eine Änderung einer Konstellation**

Method and apparatus for determining a position of a liquid jet through the modification of an orientation

Procédé et appareil de détermination d'une position d'un jet de liquide par changement d'orientation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2015 Patentblatt 2015/53**

(73) Patentinhaber: **SYNOVA S.A.**
**1266 Duillier (CH)**

(72) Erfinder:
• **Gheorghe Adrian**
**1004 Lausanne (CH)**

• **Epple Maximilian**
**1042 Assens (CH)**
• **Richerzhagen Bernold**
**2025 Saint Sulpice (CH)**
• **Richmann Annika**
**1007 Lausanne (CH)**

(74) Vertreter: **Keller & Partner Patentanwälte AG**
**Eigerstrasse 2**
**Postfach**
**3000 Bern 14 (CH)**

(56) Entgegenhaltungen:
DE-A1-102010 011 580     US-A1- 2002 198 515
US-A1- 2014 021 178

**Beschreibung**

**Technisches Gebiet**

Die Erfindung betrifft ein Verfahren zum Bestimmen einer räumlichen Lage eines Flüssigkeitsstrahls, insbesondere eines Flüssigkeitsstrahls zum optischen Führen eines Laserstrahls (siehe Anspruch 1). Weiter betrifft die Erfindung eine Vorrichung zur Durchführung des Verfahrens (siehe Anspruch 15), und eine Verwendung eines Kollisionsgegenstandes (siehe Anspruch 23).

**Stand der Technik**

Aus der EP 0 762 947 B1 (Synova) ist ein Verfahren bekannt, wie ein Laserstrahl zur Bearbeitung von Materialien in einen Flüssigkeitsstrahl eingekoppelt werden kann. In der EP 1 833 636 B1 (Synova) wird der Flüssigkeitsstrahl zusätzlich mit einem Gasstrahl umgeben, damit der Flüssigkeitsstrahl stabilisiert wird. Die verbesserten Methoden erlauben es unter anderen in immer grösseren Abständen von der Düse zu arbeiten. Damit wächst das Bedürfnis nach einer genauen Lagebestimmung des Strahls.

In JP 2009-262 163 A2 (Sugino) ist ein Verfahren beschrieben in dem eine CCD Kamera sowohl den Laser- als auch den Wasserstrahl beim Auftreffen auf einer Oberfläche beobachtet. Das Ziel der Anordnung ist aber, die beiden Strahlen aufeinander auszurichten und somit das Einkoppeln des Lasers in den Flüssigkeitsstrahl festzustellen.

Auch in DE 10 2010 011 580 A1 (darstellend den nächstliegenden Stand der Technik) und DE 10 2012 003 202 A1 wird der Flüssigkeitsstrahl vermessen und zwar mit zwei Lasermikrometern, die sowohl senkrecht zueinander als auch senkrecht zur Strahlachse stehen. Es wird zum Beispiel auch vorgeschlagen, nur eine Messlichtquelle und ein Detektor zu verwenden, die sich um den Strahl bewegen lassen. Um die Lage zu vermessen, wird der Düsenkopf in der Höhe gegenüber der Messvorrichtung verstellt.

Die im Prüfungsverfahren zitierte US 2002/198515 A1 (Somani) beschreibt ein System zur Kalibration eines trockenen Lasers und zum Ausrichten von Eye-Tracker Kameras. Für die Kalibration wird der Behandlungslaser über eine Kalibrationsscheibe mit einer Messstelle wie z.B. einer Öffnung, einer Referenzkante oder einer künstlichen Pupille geführt. Es kann eine Öffnung geben, die gross genug ist, um den Laserstrahl vollständig hindurchzulassen. Die Laserenergie, die durch die Messstelle hindurchtritt, wird gemessen. Die Abmessungen des Laserstrahls lassen sich aus dem Intensitätsprofil ermitteln, welches dadurch gewonnen wird, dass der Laser über zwei orthogonale Referenzkanten gefahren wird. Auch kann die Änderungsrate des Signals dazu genutzt werden die Form des Laserstrahles zu bestimmen.

Bei der Kalibrationsscheibe handelt es sich um eine Scheibe im Kreditkartenformat, die eine Dicke von 0.1 mm bis- 5 mm aufweist und aus Metall, Stahl, Silikon, einem Kristall oder anderen Materialien sein kann. Sie wird relativ zu dem Lasersystem angebracht und zwar so, dass sie sich zwischen dem Lasersystem und der Behandlungsebene befindet. Der Laserstrahl wird entweder durch "scanning optics" in dem Lasererzeugungssystem oder durch einen drehbaren Spiegel über die abzufahrende Fläche geführt.

Man kann nicht davon ausgehen, das Düsen mathematisch präzise gefertigt und eingebaut werden können. Insbesondere wenn die Düse ausgewechselt werden muss, oder ein neues Werkstück auf eine automatische Bearbeitungsmaschine aufgespannt wird, muss ein Flüssigkeitsstrahl neu vermessen werden, wenn seine Position und Richtung mit hoher Genauigkeit gefragt sind. Die aus dem Stand der Technik bekannten Verfahren sind entweder technisch aufwändig oder nicht automatisierbar.

**Darstellung der Erfindung**

Aufgabe der Erfindung ist es, ein dem eingangs genannten technischen Gebiet zugehörendes Verfahren zu schaffen, welches mit möglichst geringem technischen Aufwand erlaubt, die Lage eines Flüssigkeitsstrahls, insbesondere eines Flüssigkeitsstrahls zum optischen Führen eines Laserstrahls, zu bestimmen. Die Lösung der Aufgabe ist durch die Merkmale des Anspruchs 1 definiert.

Gemäss der Erfindung umfasst das Verfahren zum Bestimmen einer räumlichen Lage eines Flüssigkeitsstrahls folgende Schritte:

a) Ein Kollisionsgegenstand, der eine Messstelle aufweist wird, bereitgestellt. Die Messstelle ist dazu geeignet mit einem Flüssigkeitsstrahl zu wechselwirken.

b) Der Zustand des Flüssigkeitsstrahls wird in einer ersten Konstellation zwischen Kollisionsgegenstand und Flüssigkeitsstrahl erfasst.

c) Die Konstellation wird so geändert, dass sich der Zustand des Flüssigkeitsstrahls ändert.

d) Es wird die Änderung zwischen erster und zweiter Konstellation erfasst.

Das erfindungsgemässe Verfahren schafft die Voraussetzung, dass die Lagebestimmung (Position oder Ausrichtung) eines Flüssigkeitsstrahls einfach und schnell durchgeführt werden kann. Zudem ist das Verfahren mit geringem technischem Aufwand umsetzbar, so dass auch bestehende Anlagen mit einer Kalibrierungsvorrichtung nachgerüstet werden können.

Ausgangspunkt ist ein Flüssigkeitsstrahl, der von einer Düse (beispielsweise einer wasserstrahlgeführten Laserbearbeitungsmaschine) erzeugt wird. Der Flüssigkeitsstrahl soll vorzugsweise ein zusammenhängender, laminarer Strahl sein. Insbesondere soll der Flüssigkeitsstrahl geeignet sein, einen Laserstrahl über eine gewisse Länge wie ein Wellenleiter zu führen. Ein Sprühstrahl, der nur aus einem Schwarm von Tröpfchen besteht, ist in diesem Kontext nicht von Interesse. Im Rahmen der Erfindung können im Grundsatz drei verschiedene Zustände des Flüssigkeitsstrahls unterschieden werden: Der freie, der ungestörte und der gestörte Zustand. Allerdings kann es auch Zustände geben, die sich nicht primär auf die äussere Form des Flüssigkeitsstrahls beziehen sondern auf andere Eigenschaften wie beispielsweise die Menge eingekoppelter Strahlungsenergie oder die Frequenzen dieser Strahlung.

Beim freien Zustand tritt der Flüssigkeitsstrahl aus der Düse aus und breitet sich unter den Umgebungsbedingungen (z.B. in der Luft) in freiem Flug aus bis er in einzelne Tröpfchen zerfällt. Beim ungestörten Zustand ist der Flüssigkeitsstrahl in einer gedachten (geometrischen) Messebene unbeeinträchtigt und ohne Wechselwirkung mit dem Kollisionsgegenstand. Es kann aber vorgesehen sein, dass der Flüssigkeitsstrahl unterhalb der Messebene, und bevor er spontan in Tröpfchen zerfällt, auf eine Fläche trifft, welche vorzugsweise im Wesentlichen senkrecht zur Längsachse des Flüssigkeitsstrahls ist. In diesem Fall bricht der Flüssigkeitsstrahl praktisch glatt und ohne Ablenkung ab. Beim gestörten Zustand kollidiert der Flüssigkeitsstrahl (in der Messebene) zumindest teilweise mit dem Kollisionsgegenstand, so dass eine Störung (Ablenkung, Teilung und/oder Unterbrechung) des Flüssigkeitsstrahls resultiert.

Der Grundgedanke der Erfindung besteht also darin, dass der Zustand des Flüssigkeitsstrahls gezielt geändert wird mit einem Kollisionsgegenstand und dass die Änderung des Zustandes im Zusammenhang mit einer Konstellationsänderung beobachtet wird. Je kleiner die Konstellationsänderung zwischen dem ersten Zustand einerseits und dem zweiten Zustand andererseits ist, desto genauer ist die Position oder Richtung des Flüssigkeitsstrahls bestimmbar. Einer der beiden Zustände kann zum Beispiel der Zustand "gestört" sein und der andere "ungestört" oder "frei". Es können aber auch andere Kombinationen von Zuständen genutzt werden.

Die räumliche Lage ist im Rahmen der Erfindung wie folgt zu verstehen: Es sollen damit sowohl die Position eines geeigneten Referenzpunktes also auch geeignete Richtungsvektoren erfasst sein. Eine so allgemein erfasste Lage eines einzelnen Gegenstandes lässt sich im Raum mit 6 Parametern beschreiben. Das können zum Beispiel die 3 Raumkoordinaten (x,y,z) des Referenzpunktes und die 3 Komponenten des gewählten Richtungsvektors sein. Für den Flüssigkeitsstrahl bieten sich also die Raumkoordinaten der Austrittsöffnung der Düse und die Ausbreitungsrichtung des Strahls an. Der Richtungsvektor lässt sich natürlich auch durch 3 Winkel bezüglich einer geeigneten Ebene und einer Nullrichtung beschreiben. Das könnte zum Beispiel die Bewegungsebene der Düse sein und als Nullrichtung liesse sich eine der Begrenzungen des Arbeitsbereichs nutzen, falls diese gerade ist.

Für den Flüssigkeitsstrahl könnte zum Beispiel die Position Zentrum des Düsenausgangs". als Referenzpunkt der Position und die Ausbreitungsrichtung des Flüssigkeitsstrahls an der Düse als Richtungsvektor dienen. Die Position könnte aber auch durch einen Punkt auf dem Werkzeugkopf gegeben sein der sich gegenüber dem Flüssigkeitsstrahl nicht bewegt. Ebenso kann ein abstrakter Punkt im Raum gewählt werden. Im Fall des Kollisionsgegenstandes könnte ein Mittelpunkt die Position definieren und Richtungsvektoren parallel zu Messkanten eine Richtung. Ebenso gut kann aber auch die Messstelle zur Positionsbestimmung genutzt werden und andere Richtungsvektoren gewählt werden. Position und Richtungsvektoren müssen Flüssigkeitsstrahl bzw. Messstelle so erfassen, dass sich die Ausmessungen vom Flüssigkeitsstrahl bzw. der Messstelle bezüglich diesen Referenzen erfassen lassen. Man sollte also z.B. sagen können, dass die Richtung des Flüssigkeitsstrahl und der Richtungsvektor sich um einen Differenzvektor (dx,dy,dz) unterscheiden oder die Messstelle um einen Vektor (a,b,c) gegenüber der Position verschoben ist. Dabei müssen dann der Differenzvektor (dx, dy, dz) oder der Abstandsvektor (a, b, c) bekannt sein.

Mit "Konstellation" ist im Rahmen der Erfindung die Lage von Flüssigkeitsstrahl und Kollisionsgegenstand relativ zueinander gemeint. Die Konstellation ist daher unabhängig vom gewählten Koordinatensystem. Sie lässt sich ebenfalls mit 6 Parameters beschreiben. So kann man zum Beispiel die Translation zwischen den beiden Positionen und die Drehung zwischen den Richtungsvektoren nutzen.

Um die Konstellation in einem äusseren Koordinatensystem zu verankern, sind weitere 6 Parameter notwendig. Mit "äusserem Koordinatensystem" ist hier eines gemeint, das unabhängig von Flüssigkeitsstrahl und Gegenstand definiert ist. Der Ursprung eines solchen Koordinatensystems könnte zum Beispiel durch ein Messgerät definiert sein welches an einer beliebigen Stelle im Raum montiert ist. Oder eine der Achsen des Koordinatensystems könnte durch die Lotrichtung definiert werden in einem Fall, in dem die Richtungsvektoren von Flüssigkeitsstrahl und Gegenstand unabhängig von der Lotrichtung sind, weil z.B. die Maschine als Ganzes schräg steht. Für die Materialbearbeitung ist in der Regel die Lage von Werkzeug zu Werkstück gesucht. Da das Werkzeug hier der Flüssigkeitsstrahl ist, entspricht die gesuchte räumliche Lage der Konstellation, wenn der Kollisionsgegenstand am Ort des Werkstückes zur Messung genutzt wird.

Ein äusseres Koordinatensystem zusammen mit den 6 nötigen Parametern ergibt sich dann, wenn die Positionen von Flüssigkeitsstrahl und Kollisionsgegenstand in diesem bestimmt werden. Das könnte zum Beispiel durch ein Kamerasystem geschehen. Mit solchen Daten erhält man dann auch die räumliche Lage in eben diesem äusseren Koordinatensystem. Wenn der Kollisionsgegenstand oder der Flüssigkeitsstrahl in nur wenigen Parametern gegenüber dem Wunschkoordinatensystem verschoben sind, so muss natürlich nur diese Verschiebung bekannt sein.

In einer bevorzugten Ausführungsform wird immer nur ein Parameter der Konstellation nacheinander verändert. Die anderen Parameter bleiben konstant. Damit vereinfacht sich die Auswertung der Messungen erheblich.

Die Änderung der Konstellation kann unterschiedliche erfasst werden. Es ist zum Beispiel möglich tatsächlich die Änderung zu messen. Eine Möglichkeit dazu sind zum Beispiel Zähler an Schrittmotoren mit denen die Konstellation geändert wird. Bei einer Änderung mit konstanter Geschwindigkeit oder bekanntem Bewegungsmuster lässt sich auch über eine Zeitmessung eine Konstellationsänderung erfassen. Es ist aber auch möglich die Lage von Flüssigkeitsstrahl und Gegenstand zu erfassen, daraus die Konstellation zu berechnen und diese mit der letzten Konstellation zu vergleichen. Dies kann zum Beispiel mit der Hilfe von Kameras geschehen. Werden nur einzelne Parameter Verändert, so kann dieses Wissen genutzt werden und gezielt nur die Änderung dieser Parameter gemessen werden. Solche einzelnen Parameter sind zum Beispiel nur die Verschiebung eines oder beider Referenzpunkte in Richtung einer Koordinatensystemachse. Es können aber auch die Referenzpunkte im Raum festgehalten werden und eine Komponente des Richtungsvektors durch eine Drehung um die geeignete Achse geändert werden.

Es gibt verschiedene Möglichkeiten, den Zustand des Flüssigkeitsstrahls zu ermitteln und zu überwachen. Einige Messmethoden werden weiter unten erläutert.

Die Konstellation zwischen Flüssigkeitsstrahl und Kollisionsgegenstand soll so geändert werden, dass in einer Konstellation eine Wechselwirkung ("Störung") zwischen Kollisionsgegenstand und Flüssigkeitsstrahl gegeben ist und in einer anderen Konstellation keine oder eine andere. Es spielt an sich keine Rolle, ob der Flüssigkeitsstrahl oder der Kollisionsgegenstand oder beides verschoben oder verdreht wird. Da in der Regel der Flüssigkeitsstrahl zur Bearbeitung von Werkstücken genutzt wird und diese ja auch mit der gewünschten Genauigkeit gegenüber dem Flüssigkeitsstrahl verschoben werden müssen, bietet es sich an, den Verschiebungsmechanismus zu nutzen, der ohnehin schon in der Bearbeitungsvorrichtung vorhanden ist. Bei Maschinen, die mit einem verschiebbaren Bearbeitungskopf arbeiten, ist es deshalb von Vorteil, den Flüssigkeitsstrahl zu bewegen. Andererseits gibt es auch Maschinen, die mit einem ortsfesten Bearbeitungskopf und einem verschiebbaren Werkstückhalter (z.B. einem x-y-Tisch) arbeiten.

Alternativ kann aber auch der Kollisionsgegenstand auf einem geeigneten Mikrometertisch montiert und so kontrolliert verschoben werden. Auch andere Anordnungen sind denkbar. Wichtig ist dabei, dass die Änderung in der Konstellation ausreichend gross ist um eine Änderung in der Kollisionsgegenstand-Flüssigkeit Wechselwirkung zu erreichen. Gleichzeit will man grosse Konstellationsänderungen meiden, da sonst die geometrische Auflösung reduziert ist.

Der Kollisionsgegenstand ist ein Körper mit mindestens einer Messstelle. Dabei ist eine Messstelle bevorzugt eine Oberflächen-Unstetigkeit (typischerweise eine Ecke oder Kante), die in den Flüssigkeitsstrahl gebracht werden kann. Prinzipiell kann aber jede Stelle der Oberfläche eines beliebigen Körpers als Messstelle dienen. Ihre Position muss sich einfach mit genügender Genauigkeit bestimmen lassen. Die Möglichkeiten der Messstellen werden weiter unten noch eingehend diskutiert.

Der Kollisionsgegenstand muss nicht einstückig ausgebildet sein, aber alle an ihm vorhandenen Oberflächenunstetigkeiten sollen in einer starren gegenseitigen Lage sein. Vor allem bei Messungen im Mikrometerbereich besteht sonst die Gefahr, dass die Messung der Lage unzuverlässig wird.

Schliesslich kann der Kollisionsgegenstand auch speziell ausgerüstet sein um Zustände des Flüssigkeitsstrahls zu erfassen. So könnte man sich zum Beispiel auch Kollisionsgegenstände vorstellen, die Sensoren ausweisen, um Strömungs- und Temperaturänderungen im Gas in unmittelbarerer Nähe des eigentlichen Flüssigkeitsstrahls oder auch die austretenden elektromagnetischen Felder eingekoppelter Strahlung zu erfassen. Alternativ könnten die Kollisionsgegenstände auch solche Eigenschaften so beeinflussen, dass ihre Änderung an anderer Stelle messbar ist. Derartige Änderungen sind auch Formen der Wechselwirkung.

In einer bevorzugten Ausführungsform weist der Kollisionsgegenstand mindestens zwei Messstellen für die Wechselwirkung mit dem Flüssigkeitsstrahl auf, wobei die Messstellen in unterschiedlichen Ebenen liegen. Es werden dabei mindestens zwei Konstellationsänderungen ausgeführt.

Die Ebenen sind vorzugsweise senkrecht zur Richtung des Flüssigkeitsstrahls ausgerichtet. Sie können aber auch bewusst so gewählt sein, dass der Flüssigkeitsstrahl in einem bestimmten Winkel von zum Beispiel 70° durch sie hindurch dringt. Dies ist zum Beispiel dann interessant, wenn der bestimmte Winkel für die nachfolgende Bearbeitung eines Werkstücks verifiziert bzw. sichergestellt werden muss.

Eine Anordnung von zwei oder mehr Kanten in mindestens zwei unterschiedlichen Höhen (bzw. in zwei axialen Positionen bezüglich des Flüssigkeitsstrahls) erlaubt die Vermessung der Ausrichtung des Flüssigkeitsstrahls in einem Mess-Koordinatensystem, ohne dass die Vorrichtung zur Erzeugung des Flüssigkeitsstrahls und der Kollisionsgegenstand in Richtung des Flüssigkeitsstrahls (z-Richtung) verschoben werden müssen. Dies ist zum Beispiel für eine Bearbeitungsmaschine interessant, die nur eine x-y Verschiebung zulässt.

In einer bevorzugten Variante wird die mindestens eine Konstellationsänderung in einer Richtung ausschliesslich quer zu der Längsachse des Flüssigkeitsstrahls durchgeführt. Die Konstellationsänderungen erfolgen also nur als Verschiebung in einer x-y Ebene und nicht in z-Richtung (wobei die z-Richtung die Richtung des Flüssigkeitsstrahls bezeichnet).

In vielen Anwendungen ist die Position des Strahls in einem festen Abstand von der Düse, die den Flüssigkeitsstrahl produziert, gefragt. Für die volle dreidimensionale (3D) Bearbeitung eines Werkstücks mit dem Flüssigkeitsstrahl sind dagegen alle drei Koordinaten eines vorgegebenen Bearbeitungspunktes des Flüssigkeitsstrahls zu bestimmen. Auch die Richtung des Flüssigkeitsstrahls im Raum soll verifiziert werden. Wenn der Kollisionsgegenstand mindestens eine Kante in dem gewünschten z-Achsen Abstand zum Ausgang der Düse hat, die den Flüssigkeitsstrahl generiert, dann müssen nur noch zwei Koordinaten vermessen werden und zwar die beiden in der x-y-Ebene. Im Folgenden wird davon ausgegangen, dass die x- und die y-Achse senkrecht aufeinander und beide senkrecht zur z Achse stehen, welche die "Höhen-Richtung" definiert.

Die Messung wird nun wie folgt durchgeführt: Kollisionsgegenstand und Flüssigkeitsstrahl werden so gegeneinander vorschoben, dass der Flüssigkeitsstrahl in einer Position auf die Kante des Kollisionsgegenstandes trifft. Die Änderung des Zustandes des Flüssigkeitsstrahls wird festgestellt und die dazugehörende Konstellation in der Richtung, in der die Konstellationsänderung stattgefunden hat. Die Bewegungsrichtung wird geändert, so dass sie linear unabhängig von der ersten Bewegungsrichtig ist. Wenn der Kollisionsgegenstand nur eine Messstelle aufweist, wird er um einen Winkel >0 gedreht (z.B. um 90°), bevor die zweite Konstellationsänderung erzeugt wird. Wenn der Gegenstand zwei Messstellen aufweist, wird die Konstellationsänderung auf die zweite Messstelle gerichtet. In beiden Fällen trifft der Flüssigkeitsstrahl nach der zweiten Konstellationsänderung (in die zweite Bewegungsrichtung) auf die gewünschte Messstelle. An der Zustandsänderung des Flüssigkeitsstrahls wird dieses Ereignis erkannt und damit auch eine zweite Konstellation bestimmt.

So kann man zwei Koordinaten in einem festen Abstand zwischen Düse und Kollisionsgegenstand gewinnen.

In einer bevorzugten Variante werden in weiteren axialen Positionen des Kollisionsgegenstands relativ zum Strahl die Konstellation des Strahls und damit die Winkellage des Strahls bestimmt.

Diese Messung verläuft analog zu der Messung in x-y-Ebene. In einer Variante ist es möglich, dass die Kante und der Flüssigkeitsstrahl in z-Richtung gegeneinander verschoben werden bis eine Zustandsänderung des Flüssigkeitsstrahls festgestellt wird. Dies ist zum Beispiel dann möglich, wenn der Winkel zwischen der z-Richtung und der Richtung (Längsachse) des Flüssigkeitsstrahls einen bestimmten Mindestwert (von zum Beispiel 10°, insbesondere 20°) überschreitet.

Das bevorzugte Messverfahren ist das folgende: Eine erste Position in einer ersten Ebene mit konstanter z-Position wird mit der oben beschriebenen Methode zur Bestimmung der Position in einer Ebene festgestellt. Dies kann, zusammen mit dem bekannten z, eine zwei oder drei dimensionale Position sein. Dann wird die z-Position geändert und die Position in dieser zweiten, zur ersten Ebene parallelen, Ebene vermessen. Aus den gewonnenen Daten lässt sich nun die Ausrichtung des Wasserstrahls in zwei oder drei Dimensionen bestimmen.

Diese Methode unterstellt, dass der Flüssigkeitsstrahl im Wesentlichen gerade ist. Ist der Flüssigkeitsstrahl vertikal nach unten ausgerichtet und gibt es keine Störkräfte, so wird er gerade sein. Ist der Flüssigkeitsstrahl horizontal ausgerichtet, wird er unter Umständen in messbarer Weise von der geraden Linie abweichen. Gleiches gilt für den Fall, dass man es mit einem elektrisch geladenen Strahl zu tun hat, der sich in einem elektromagnetischem Feld bewegt oder wenn es seitliche Gasströmungen gibt. Besteht das Bedürfnis nach mehr Stützstellen, sind weitere Messungen auf weiteren Ebenen mit konstantem z nötig.

In einer spezifischen Ausführungsform wird die Konstellationsänderung durch eine Verschiebung des Flüssigkeitsstrahls erreicht. Der Kollisionsgegenstand bleibt also unbewegt.

Um mechanische Belastungen zu vermeiden und Energie zu sparen wird bevorzugt das Teil bewegt, das die geringere Masse hat. Gleichzeitig ist es aber vorteilhaft, wenn das im Messprozess bewegte Teil dasselbe ist, welches sich auch in der Nutzung (d.h. bei der Werkstückbearbeitung) bewegt. Häufig, insbesondere bei 3D Bearbeitungsmaschinen, ist das die Einheit, die den Flüssigkeitsstrahl erzeugt, also der Bearbeitungskopf.

Alternativ können aber auch z.B. die Abspannvorrichtung oder nur der Kollisionsgegenstand bewegt werden.

In einer bevorzugten Ausführung wird zum Bestimmen eines Mittelpunkts oder eines Durchmessers des Flüssigkeitsstrahls der Kollisionsgegenstand zunächst mit einer ersten Messstelle auf einer ersten Seite des Flüssigkeitsstrahls in Wechselwirkung gebracht. Danach wird der Kollisionsgegenstand mit einer zweiten Messstelle auf einer zweiten Seite des Flüssigkeitsstrahls in Wechselwirkung gebracht. Die zweite Seite ist diametral gegenüber der ersten Seite. Mittelpunkt und ein Durchmesser des Flüssigkeitsstrahls können dann aus zwei ausgegebenen Kollisionspositionen errechnet werden. Die beiden Messstellen liegen in der gleichen Messebene bezüglich der Richtung des Flüssigkeitsstrahls.

Damit die Messung möglichst genau wird, muss der Zustand des Flüssigkeitsstrahls mit einer ausreichend empfindlichen Messmethode bestimmt werden. Es muss also schon eine geringfügige Störung (also eine minimale Kollision der Messstelle mit dem Flüssigkeitsstrahl) detektierbar sein. Geeignete Messmethoden werden weiter unten beschrieben.

Weil der gegenseitige Abstand der Messstellen und der Abstand zwischen den Orten der Zustandsänderung des Flüssigkeitsstrahls bekannt sind, ergibt sich der Strahldurchmesser aus der Differenz dieser beiden Messwerte. Mit dieser Information und einer der Zustandsänderungspositionen kann dann die Position des Mittelpunktes des Strahls berechnet werden.

In einer bevorzugten Ausführung, wird ein Messlicht in den Flüssigkeitsstrahl eingekoppelt und zum Bestimmen des Zustands des Flüssigkeitsstrahls eine Rückstreuung, Reflektion oder Auskopplung des Messlichts detektiert. Das Messlicht kann dabei aus einem beliebigen Frequenzbereich des elektromagnetischen Spektrums gewählt werden, muss aber den ungestörten Flüssigkeitsstrahl als Wellenleiter nutzen können. Die Rückstreuung, Reflektion bzw. Auskopplung hängt vom Zustand des Flüssigkeitsstrahls ab. Bei einer Störung des Flüssigkeitsstrahls durch den Kollisionsgegenstand wird das Messlicht anders (oder nicht mehr) reflektiert oder ausgekoppelt, als im ungestörten Zustand.

Diese Ausführungsform hat den Vorteil, dass sich sehr einfach und zuverlässig bestimmen lässt, in welchem Zustand der Flüssigkeitsstrahl ist respektive ob der Flüssigkeitsstrahl gestört ist.

Das Messlicht ist in einer bevorzugen Variante im Bereich des infraroten, des ultravioletten oder des sichtbaren Lichts. Der Berechnungsindex ist wellenlängenabhängig. Wenn der Berechnungsindex des Flüssigkeitsstrahls $n_1$ ist und der Brechungsindex des Umgebungsgases $n_2$, dann muss $n_1 > n_2$ sein um die Totalreflektion zu erreichen. Je kleiner das Verhältnis $n_2/n_1$ ist, desto grösser ist der Akzeptanzwinkel unter dem das Licht in den Strahl eingekoppelt werden kann. Ausserdem fällt das Evaneszentzfeld für kleinere Verhältnisse und kleine Wellenlängen schneller ab. Es ist dabei, in dieser Anwendung, durchaus denkbar bewusst Energie aus dem Evaneszentzfeld auszukoppeln und dies zu messen. In diesem Fall könnte auch ein langsam abfallendes Evaneszenzfeld von Vorteil sein. Eine "Störung" könnte dann festgestellt werden ohne dass sich Messstelle und Flüssigkeitsstrahl im eigentlichen Sinne berühren (optischer Tunneleffekt). Dies hätte den Vorteil, dass die Messstelle mechanisch nicht beansprucht würde. Da der Flüssigkeitsstrahl selbst nicht beeinträchtigt wird, wäre es auch denkbar eine solche Messung zeitgleich mit der Bearbeitung eines Werkstückes vorzunehmen. Dazu könnte Strahlung mit zwei sehr unterschiedlichen Wellenlängen eingekoppelt werden von denen eine energiereiche, kurzwellige Strahlung der Materialbearbeitung dient und eine langwellige Strahlung für die Positionsbestimmung genutzt wird.

Für einen Wasserstrahl im Vakuum ergibt sich z.B., dass Wellenlängen zwischen 10 nm - 80 nm nicht geeignet sind da dort $n_1 < 1$ ist. Nach oben sind die nutzbaren Wellenlängen durch den Durchmesser des Flüssigkeitsstrahls begrenzt. Ausserdem soll ja eine Störstelle detektiert werden können daher sollte die Wellenlänge zumindest in derselben Grössenordnung sein wie die Störstelle oder die im Flüssigkeitsstrahl erzeugten Störungen. Daher ist Strahlung mit Wellenlängen über 1 mm (Mikrowellen, Radiowellen) nicht mehr interessant. Für sehr kurzwellige Strahlung dürfte schon der ungestörte Flüssigkeitsstrahl eine Oberflächenrauheit aufweisen, die die Reflektion grösstenteils verhindert. Daher ist auch Strahlung mit Wellenlängen kleiner als eine Grössenordnung von 0.1 nm (mittlere Röntgenstrahlung) für diese Anwendung nicht mehr sinnvoll nutzbar.

Je nach Messmethode lassen sich alle drei Zustände ("frei", "gestört", "ungestört") oder auch nur zwei Zustände ("gestört oder frei" und "ungestört") unterscheiden. Die Messmethoden sind weiter unten im Detail beschrieben.

In einer bevorzugten Ausführung wird ein Messlicht in den Flüssigkeitsstrahl eingekoppelt. So formt sich einen Messlicht-Strahl.

In einer bevorzugten Ausführungsform wird eine der räumlichen Lagen derart gewählt, dass der Flüssigkeitsstrahl auf eine reflektierende Fläche trifft, die im Wesentlichen senkrecht zur Richtung des Flüssigkeitsstrahls liegt. Dadurch wird zumindest ein Teil des Messlichts rückwärts in den Flüssigkeitsstrahl gekoppelt. Der reflektierte Teil des Messlichts wird zum Beispiel oberhalb der Düse mit einer Photodiode beobachtet. Eine Wechselwirkung von Kollisionsgegenstand und Flüssigkeitsstrahl oder die Zerstörung des Flüssigkeitsstrahls äussert sich durch ein Auskoppeln und damit dem Verlust des reflektierten Messlichts.

Mit dieser Methode lassen sich also die beiden Zustände "gestört" und "frei" vom Zustand "ungestört" unterscheiden. Der Vorteil ist, dass die optischen Elemente für die Detektion des Zustands des Flüssigkeitsstrahls im Bearbeitungskopf eingebaut werden können. Zudem ist die Messmethode einfach und günstig zu realisieren. Licht ist hier als elektromagnetische Strahlung einer beliebigen Wellenlänge zu verstehen, solange sie sich durch den Flüssigkeitsstrahl führen lässt und aus diesem auskoppelt wenn er gestört wird.

Ausserdem kann die Messelektronik im Bearbeitungskopf platziert werden, der den Flüssigkeitsstrahl produziert. Der Kollisionsgegenstand und auch die Werkstück-Aufspannvorrichtung sind dann frei von zusätzlichen Sensoren und elektronischen Messelementen.

Es ist auch möglich, dass der Kollisionsgegenstand mehrere ebene Flächen aufweist die das Licht unterschiedlich gut reflektieren, so dass über die Stärke des reflektierten Signals eine Information über die Position des Flüssigkeitsstrahls gewonnen werden kann.

In einer anderen bevorzugten Ausführung wird der Zustand des Flüssigkeitsstrahls akustisch oder mechanisch ermittelt.

Wenn der Flüssigkeitsstrahl auf den Kollisionsgegenstand trifft, wird ein bestimmtes Geräusch erzeugt. Dieses lässt sich mit Mikrofonen messen. Weil der Flüssigkeitsstrahl mit einem erheblichen Druck (von typischerweise mehr als 100 bar) im Düsenvorraum erzeugt wird, wirkt auf die Messstelle eine Kraft, wenn sie vom Flüssigkeitsstrahl getroffen wird. Diese Kraft kann mechanisch gemessen werden. Der Unterschied zwischen "freiem" Zustand des Flüssigkeitsstrahls und "gestörtem oder ungestörtem" Zustand wird somit deutlich messbar.

Ein akustischer Sensor kann in einer geeigneten Entfernung vom Kollisionsgegenstand und Flüssigkeitsstrahl platziert werden oder auch direkt mit dem Kollisionsgegenstand oder anderen Bauteilen verbunden sein.

Für die mechanische Messung kann die Messstelle durch ein biegbares Element gebildet sein, so dass mit einem Sensor (z.B. ein Drucksensor oder ein Vibrationssensor) die Krafteinwirkung gemessen werden kann.

Schliesslich kann auch mit einer Lichtschranke detektiert werden, ob der Flüssigkeitsstrahl gestört ist oder nicht. Wenn der Flüssigkeitsstrahl auf einer gewissen Höhe gestört wird, wird er weiter unten nicht mehr vorhanden oder abgelenkt sein.

Bei einer speziellen Ausführungsform trifft der Flüssigkeitsstrahl in einer der räumlichen Konstellationen auf eine Referenzfläche. Die Referenzfläche ist gegenüber einer Messstelle am Kollisionsgegenstand in Richtung des Flüssigkeitsstrahls versetzt. Das heisst, die Referenzfläche ist quasi unter der Messstelle und damit unter der Messebene.

In einer bevorzugten Ausführung gibt es zwischen einer freien Strahl-Position, an der der Strahl durch die Ausnehmung tritt, und einer gestörten Position, bei der der Flüssigkeitsstrahl in Wechselwirkung mit der Kante ist, mindestens eine ebene Fläche, so dass der Flüssigkeitsstrahl ungestört auf diese treffen kann. Die Referenzfläche ist mindestens so gross wie der Durchmesser des Flüssigkeitsstrahls. Mit ihr kann zum Beispiel ein Referenzsignal erzeugt werden, bevor oder nachdem der Flüssigkeitsstrahl durch die Messstelle gestört wird.

Wenn der Zustand der Flüssigkeit optisch gemessen wird, wird die Referenzfläche reflektierend ausgebildet. Ein im Flüssigkeitsstrahl geführter Laserstrahl kann dann durch die Referenzfläche reflektiert werden. Sie kann zum Beispiel aus Kupfer oder Edelstahl bestehen.

In dieser Ausführung gerät der Flüssigkeitsstrahl, wenn er über den Kollisionsgegenstand geführt wird, in alle drei möglichen Zustände: Bei der Ausnehmung (oder ausserhalb des Wechselwirkungsbereiches mit dem Kollisionsgegenstand) hat man einen freien Flüssigkeitsstrahl. Bei der Referenzebene ist der Flüssigkeitsstrahl im ungestörten Zustand und an der Messstelle (Kante, Ecke etc.) hat man einen gestörten. Die Methode zum Bestimmen des Zustands des Flüssigkeitsstrahls kann mindestens den gestörten vom ungestörten Zustand unterscheiden. Vorzugsweise wird aber eine Messmethode gewählt, die alle drei unterschiedlichen Zustände unterscheiden kann.

Eine der weiter unten vorgestellten Messmethoden nutzt reflektiertes Licht oder andere geeignete elektromagnetische Strahlung. Im Folgenden wird alle geeignete elektromagnetische Strahlung als Licht bezeichnet. Solches Licht kann in einen Flüssigkeitsstrahl eingekoppelt werden. Ist dieser Strahl im ungestörten Zustand und trifft auf eine Ebene die für das Licht reflektierend ist, so wird Licht in den Flüssigkeitsstrahl zurück reflektiert und kann gemessen werden. Für eine solche Messmethode ist daher eine reflektierende Ebene wichtig um den Zustand "ungestört" deutlich zu erkennen.

Für viele Messmethoden ist der Übergang vom Zustand "ungestört" zu "gestört" einfacher zu erkennen als der von "frei" zu "gestört". Daher ist es günstig, eine Region auf dem Kollisionsgegenstand zu haben, die den Zustand "frei" von dem Zustand "gestört" abgrenzt.

In einer besonderen Ausführungsform wird zum Erfassen des ersten und zweiten Zustands des Flüssigkeitsstrahls eine als optischer Leiter wirkende Länge des Flüssigkeitsstrahls ermittelt.

Die Länge als optischer Leiter endet dort, wo sich der Flüssigkeitsstrahl (im freien Flug) aufzulösen beginnt, respektive wo er (im ungestörten oder gestörten Zustand) auf eine vorgegebene Referenzfläche oder Messstelle am Kollisionsgegenstand trifft.

Diese Variante erlaubt es, zum einen zwischen dem freien, dem gestörten und dem ungestörten Zustand des Flüssigkeitsstrahls zu unterscheiden. Auch wenn es mehrere Messstellen am Kollisionsgegenstand in unterschiedlicher Höhe gibt, lassen sich diese voneinander unterscheiden. Ausserdem gewinnt man eine Information über den absoluten (und nicht nur relativen) Abstand in z-Richtung zwischen der den Flüssigkeitsstrahl erzeugenden Düse und der Messstelle des Kollisionsgegenstandes.

Die Länge lässt sich beispielsweise durch eine Flugzeitmessung eines eingekoppelten Laserpulses realisieren. Aber auch andere Methoden sind machbar. Zum Beispiel kann der Flüssigkeitsstrahl als Ganzes mit einer CCD Kamera aufgenommen werden, und danach können die Bilder ausgewertet werden. Ein weiteres Beispiel ist die "optical coherence tomography".

In einer bevorzugten Ausführungsform werden kurze Laserpulse in den Flüssigkeitsstrahl eingekoppelt. Die internen (Rück-) Reflektionen werden beobachtet. Aus diesen Daten lassen sich Lage und/oder Art der Wechselwirkung zwischen Kollisionsgegenstand und Flüssigkeitsstrahl bestimmen.

Der Vorteil bei dieser Messung besteht darin, dass man sehr detaillierte Informationen über den Flüssigkeitsstrahl erhält, so lassen sich neben den drei Zuständen auch Daten über die Lichtleitfähigkeit gewinnen.

In der Anwendung bei flüssigkeitsgeführten Laserbearbeitungsvorrichtungen ist es denkbar, den Bearbeitungslaser in stark abgeschwächter Form (zum Beispiel auf 1/1000) auch als Messlaser zu verwenden. Um eine genügende Längenauflösung zu erreichen, müssen die Laserpulse entsprechend kurz sein.

Die Datenauswertung ist etwas aufwändiger als bei der oben beschriebenen optischen Messmethode. Sie lässt sich allerdings gut computerunterstützt umsetzen und ist kommerziell erhältlich.

Ähnlich wie bei der Methode mit dem reflektierten Mess-Lichtstrahl kann hier die ganze Sensorik und Messelektronik im Bearbeitungskopf der Maschine (in dem auch die Optik für den Bearbeitungslaser und die Düse für den Flüssigkeitsstrahl sitzt) integriert werden. Kollisionsgegenstand und Werkstückhalter bzw. Arbeitstisch können daher passiv sein.

In einer bevorzugten Ausführung werden Betrag und Richtung der Konstellationsänderung bestimmt durch Informationen über die Positionen und Zustände an der ersten und zweiten Position. Dabei wird die Konstellationsänderung bestimmt, bei der der Flüssigkeitsstrahl einen Wechsel des Zustands erfährt.

Werden zwei beliebige Messungen durchgeführt, so kann es passieren, dass man entweder keinen Zustandswechsel beobachten kann (wahrscheinlich bei kleiner Verschiebung) oder aber, dass man einen Abstand zwischen den beiden Positionen hat, der grösser ist als die geforderte Messgenauigkeit.

Um dies zu vermeiden wird folgendes Vorgehen vorgeschlagen, das auf der binären Suche basiert: Grundsätzlich kann man davon ausgehen, dass es durch Justieren von Hand oder durch Nutzung von alten Einstellungen stets gelingt, zwei (genügend weit voneinander entfernte) Positionen X1 und X2 mit unterschiedlichen Zuständen des Flüssigkeitsstrahls zu finden. Im Folgenden wird angenommen, dass der Zustand in der Position X1 "ungestört" oder "frei" ist und in der Position X2 "gestört". Zudem wird zum leichteren Verständnis angenommen, dass das Verfahren der Konstellationsänderungen bei Position X1 startet.

Um den Übergang zwischen "ungestört oder frei" und "gestört" möglichst effizient und genau zu finden, wird die nächste Zustandsmessung auf einer Position X3 zwischen den ersten beiden Positionen X1 und X2 durchgeführt. Ist der Zustand bei X3 "gestört", wird die Position X2 ersetzt durch die neue Position X3 (Fall A). Ist dagegen der Zustand bei X3 "ungestört öder frei", wird die Position X1 ersetzt durch die neue Position X3 (Fall B). Die nächste Messstelle X4 wird nun im Fall A zwischen Position X1 und X3 und im Fall B zwischen Position X2 und X3 gewählt. Mit diesem binären Suchverfahren kann gezielt die Lage mit dem Zustandswechsel auf die gewünschte Genauigkeit eingegrenzt werden. Die Konstellationsänderungen X1→X3, X3→X4 etc. liegen alle auf derselben Geraden.

Der Vorteil bei einem solchen Messverfahren ist, dass der Sensor nur selten ausgelesen werden muss und die Position auch nur an speziellen Punkten gefragt ist. Man kann sogar die Genauigkeit der Positionsmessung variieren und erst in den letzten Schritten zur vollen Messgenauigkeit übergehen. Der Nachteil ist, dass man viele Richtungsänderungen hat und damit verbundene Kräfte auf die Mechanik und eventuell Wartezeiten, in denen sich das System stabilisieren muss.

In einer anderen bevorzugten Ausführungsform wird der Zustand des Flüssigkeitsstrahls in regelmässigen zeitlichen Abständen gemessen. Dabei können die zeitlichen Abstände auf die Geschwindigkeit der Konstellationsänderung von Kollisionsgegenstand und Flüssigkeitsstrahl abgestimmt sein.

Um die Lage zu finden, an der der Flüssigkeitsstrahl von einem der Zustände "frei" oder "ungestört" zu "gestört" wechselt oder umgekehrt, kann man auch den Flüssigkeitsstrahl an eine geeignete Position setzen und von dort mit einer geeigneten Bewegung so über den Kollisionsgegenstand führen, dass die Messstellen berührt werden. Während dieser Bewegung werden Messungen durchgeführt und zwar vorzugsweise in einer Frequenz, die der Bewegungsgeschwindigkeit so angepasst ist, dass die geforderte Messgenauigkeit erreicht wird.

Der Vorteil bei diesem Messverfahren ist, dass Schwingungen in der ganzen Vorrichtung und Wartezeiten zum Stabilisieren der Vorrichtung weitgehend vermieden werden, da gleichmässige Bewegungen höchstens mit minimalen Beschleunigungen verbunden sind. Auch ist die benötigte Zeit für eine Messung fest wenn der abgefahrene Weg fest ist. Und die Auswertung der Daten kann nach der eigentlichen Messung geschehen. Qualitative Vergleiche wie zum Beispiel die Reflexionseigenschaften unterschiedlicher Flächen, sind besser möglich.

In einer besonderen Ausführungsform ist die erste räumliche Lage des Flüssigkeitsstrahls so gewählt, dass der Flüssigkeitsstrahl nicht in einem gestörten Zustand ist (sondern im Zustand "frei" oder "ungestört"). Die erste Lage ist zum Beispiel so gewählt, dass der Flüssigkeitsstrahl auf eine reflektierende Oberfläche trifft, so dass Messlicht, das im Flüssigkeitsstrahl geführt wird, am Ende des Flüssigkeitsstrahls in den Strahl zurück reflektiert wird. Die erste Lage kann aber auch so gewählt werden, dass der Flüssigkeitsstrahl im Zustand "frei" ist.

Das hat den Vorteil, dass die erste Messung den Zustand des freien Flüssigkeitsstrahls bestimmt. Diese Messung kann als Test für die Funktionsfähigkeit des Geräts und der Messeinrichtung genutzt werden, da für diesen Fall mit bekannten früheren Messwerten verglichen werden kann.

Alternativ kann aber auch die erste räumliche Lage so gewählt werden, dass der Flüssigkeitsstrahl den Kollisionsgegenstand trifft oder berührt. Ein "ungestörter" Flüssigkeitsstrahl dürfte ähnlich einfach in den Messergebnissen zu erkennen sein wie der "freie" Flüssigkeitsstrahl. Allerdings ist dann aber noch ein Teil mehr, nämlich der Kollisionsgegenstand, in den Messprozess involviert. Trifft der Strahl den Kollisionsgegenstand nur teilweise, wird die Wechselwirkung komplizierter. Zum Testbetrieb eignet sich diese Konfiguration daher eher weniger.

In einer bevorzugten Variante wird der Kollisionsgegenstand fest mit der Werkstück-aufspanneinrichtung einer Bearbeitungsmaschine mit flüssigkeitsstrahlgeführtem Laser verbunden.

Dies verhindert, dass sich die Position des Kollisionsgegenstandes unabsichtlich verändert. Und die Aufspannvorrichtung und das flüssigkeitsstrahlerzeugende System sind in der Praxis in der Regel fix zueinander positioniert. Als Alternative ist es aber auch möglich, den Kollisionsgegenstand direkt an dem Werkstück zu befestigen.

In einer bevorzugten Anwendung gibt es Referenzlinien, Schablonen oder Lehren, mit denen sich schnell und präzise feststellen lässt, ob der Flüssigkeitsstrahl die gewünschte Ausrichtung hat.

Mit dem oben beschriebenen Verfahren, lässt sich ein Flüssigkeitsstrahl sehr präzise vermessen und damit auch sehr präzise ausrichten und kalibrieren. Im Nutzungsprozess selbst sollten Kalibrierung und Ausrichtung häufig kontrolliert werden, ohne dass jedes Mal der komplette Prozess durchlaufen werden muss. Ziel ist dabei eine Kontrolle und nicht eine eigentliche Vermessung. Zeigt die Kontrolle, dass der Flüssigkeitsstrahl nicht mehr ausreichend gut kalibriert ist, soll der vollständige Kalibrierungsprozess durchgeführt werden.

Solche Tests werden typischerweise mit Hilfe von Referenzen wie Linien, Schablonen oder Lehren durchgeführt. Man kann sich zum Beispiel vorstellen, dass der Bearbeitungslaser abgeschwächt wird und der Flüssigkeitsstrahl in eine Testlehre oder Schablone an einer definierten Position gelenkt wird. Kommt es nun zu einer Wechselwirkung zwischen der Lehre oder der Schablone und dem Flüssigkeitsstrahl, liegt eine Fehljustierung vor. Diese Wechselwirkung kann wie bei der Wechselwirkung mit einer Kante am Kollisionsgegenstand detektiert werden. Je nach Sensor und Messmethode sind Zusätze wie eine reflektierende oder druckempfindliche Oberfläche nötig.

Ob der Flüssigkeitsstrahl einer vorgegeben Linie folgt oder einen geforderten Punkt trifft, kann von Auge oder mit einer Kamera kontrolliert werden. Auch andere Sensoren sind denkbar.

In einer bevorzugten Variante des Verfahrens ist mindestens eine der Konstellationsänderungen eine Verschiebung kleiner als 10 Mikrometer, insbesondere nicht grösser als 1 Mikrometer.

Dies ist die Genauigkeit mit der ein flüssigkeitsgeleiteter Laser genutzt wird. Die Justierung sollte es erlauben das Gerät bestmöglich zu verwenden. Alternativ kann natürlich eine weniger genaue Justierung vorgenommen werden. Das beschleunigt den Messprozess. Auch eine genauere Justierung ist möglich, wenn die Fertigung des Kollisionsgegenstands und die Steuerung der Konstellationsänderung dies zulassen.

In einer bevorzugten Ausführungsform weisst der Kollisionsgegenstand mindestens eine scharfe Kante auf, die als Messstelle dient.

Die Kante soll scharf sein, das heisst, sie soll einen Krümmungsradius haben, der kleiner (insbesondere mindestens zehn Mal kleiner) als der Durchmesser des Flüssigkeitsstrahls ist. Die Messstelle kann als Referenz für ein Koordinatensystem verwendet werden, in welchem die Lage des Flüssigkeitsstrahls bestimmt wird.

Die Messstelle kann auch am Ort zweier aufeinander treffender Kanten, also in einer Ecke des Kollisionsgegenstandes ausgebildet sein.

Die Kante kann, aber muss nicht, spitz ausgebildet sein. Das heisst, die aufeinander stossenden Oberflächen des Kollisionskörpers stehen vorzugsweise in einem Winkel von nicht mehr als 90° zueinander. Die Kante kann gerade sein, muss aber nicht. Sie kann beispielsweise auch kreisförmig gebogen sein.

Ist die Messstelle eine Ecke oder Spitze am Kollisionsgegenstand, so ist der Winkel der Ecke zum Beispiel nicht grösser als 120°, oder nicht grösser als 90°.

Es können am Kollisionsgegenstand auch zwei, drei oder vier (oder noch mehr) Messstellen in Form von Kanten oder Ecken ausgebildet sein. Vorzugsweise werden pro Raumrichtung zwei von einander definiert beabstandete Messstellen eingesetzt. Der Flüssigkeitsstrahl wird dann zuerst mit der ersten Messstelle in Kollision gebracht und danach mit der zweiten, der ersten Messstelle diametral gegenüber liegenden Messstelle. Der definierte Abstand der beiden Messstellen kann zum Beispiel im Bereich von 1 - 5 cm liegen.

Eine scharfe Kante erlaubt eine zuverlässige Bestimmung der Position, an der sich der Zustand des Flüssigkeitsstrahls ändert. Da für die mehrdimensionale Lagebestimmung verschiedene Raumdimensionen mit Vorteil nacheinander vermessen werden, sollen die Messstellen (Kanten) eine ausreichende Länge haben, die zum Beispiel mindestens das Fünffache, insbesondere mindestens zwanzigfache des Durchmessers des Flüssigkeitsstrahls beträgt.

Damit lässt sich die Messung auch mit einem Flüssigkeitsstrahl durchführen, dessen Position nur ungenau bekannt ist. In diesem Fall gibt es nämlich eine, in einer Dimension, ausgedehnte Kante und die Trefferlinie ist entsprechend gross.

Die Kante kann aber auch weniger scharf gefertigt sein. Für eine gute Messung muss dann aber der Kantenverlauf bekannt sein. Ist die Kante parallel zu der Flüssigkeitsstrahllängsachse ausgedehnt, so hängt der Wechselwirkungspunkt und insbesondere seine genaue Position auch von dem Winkel ab, mit dem der Flüssigkeitsstrahl auf die Kante trifft. Genau dieser Winkel ist aber zu Beginn der Messung noch unbekannt. Die Auswertung der Messdaten verkompliziert sich daher deutlich.

In einer weiteren bevorzugten Variante weisst ein Körper mehrere Kanten auf. Insbesondere ist es nützlich, zwei Kanten zu haben, die die Grundebene eines gewünschten Koordinatensystems aufspannen. Diese Grundebene ist typischerweise entweder die Ebene senkrecht zur Längsachse des Flüssigkeitsstrahls oder die Ebene parallel zur Abspannvorrichtung. Es kann sich aber auch um eine andere Ebene handeln. Die genannte Grundebene kann auch als Messebene betrachtet werden, in welcher die Kollision des Flüssigkeitsstrahls überwacht wird.

In einer weiteren bevorzugten Variante weist der Körper insgesamt vier Kanten auf, von denen jeweils zwei parallel zu einander liegen, und die nicht-parallelen Kanten die Ebene aufspannen. Der Abstand der parallelen Kanten voneinander sollte mit genügender Präzision bekannt sein. Dies erlaubt es, den Durchmesser des Flüssigkeitsstrahls und dessen Mittelpunkt zu bestimmen, ohne den Kollisionsgegenstand zu verschieben. Die Methode ist weiter unten im Detail erklärt.

In einer weiteren bevorzugten Variante weisst der Kollisionsgegenstand insgesamt sechs oder mehr Kanten auf. In diesem Fall bilden vier der Kanten die im vorherigen Absatz beschriebene Anordnung und definieren eine erste Ebene. Die anderen Kanten werden ausserhalb der ersten Ebene aber parallel zu dieser angeordnet. Dabei wird darauf geachtet, dass der Kollisionsgengenstand so montiert werden kann, dass der Flüssigkeitsstrahl alle Kanten treffen kann und nicht Kanten von anderen Kanten verdeckt werden. Weil die Lage aller Kanten in allen Raumdimensionen zueinander bekannt ist (zum Beispiel bezogen auf ein vordefiniertes Mess-Koordinatensystem), ist es mit einem solchen Kollisionsgegenstand möglich, einen Arbeitspunkt des Flüssigkeitsstrahls in allen drei Dimensionen zu bestimmen oder auch die Raumrichtung des Flüssigkeitsstrahls. Es genügt dabei den Kollisionsgegenstand oder den Flüssigkeitsstrahl in nur zwei Raumrichtungen zu verschieben.

In einer bevorzugten Variante weisst der Kollisionsgegenstand in einer der räumlichen Konstellationen eine Ausnehmung für den freien Durchtritt des Flüssigkeitsstrahls auf. Der Flüssigkeitsstrahl wird in einer der räumlichen Konstellationen durch die genannte Ausnehmung geführt. Der Flüssigkeitsstrahl kann zuerst grob so positioniert werden, dass er frei durch die Ausnehmung hindurch tritt. Danach wird die gewünschte Zahl von Konstellationsänderungen erzeugt, um den Strahl mit einer oder mehreren Messstellen des Kollisionsgegenstandes in Kontakt zu bringen. Die Messstellen können dabei in einer anderen Ebene als die Ausnehmung liegen. Sie können in den freien Bereich der Ausnehmung hineinragen oder gegenüber diesem zurückversetzt sein.

Die Messstellen können paarweise an gegenüberliegenden Seiten der Ausnehmung platziert sein.

Da der Flüssigkeitsstrahl beim Wechselwirken mit dem Kollisionsgegenstand zumindest einen Teil seiner Flüssigkeit verliert, sollte der Kollisionsgegenstand so geformt sein, dass die Flüssigkeit zügig abfliessen kann. Ein Flüssigkeitsstau auf der Oberfläche des Kollisionsgegenstands im Bereich der Messstelle kann das Wechselwirkungsverhalten mit dem Flüssigkeitsstrahl stören.

Eine erfindungsgemässe Vorrichtung zur Durchführung des Verfahrens ist in dem Anspruch 15 definiert, und umfasst einen Kollisionsgegenstand zum Wechselwirken mit dem Flüssigkeitsstrahl, eine Verschiebungsvorrichtung zum Erzeugen einer vorgebbaren Konstellationsänderung zwischen Flüssigkeitsstrahl und Kollisionsgegenstand und eine Vorrichtung zum Erfassen eines ersten und zweiten Zustands des Flüssigkeitsstrahls in einer ersten und zweiten räumlichen Konstellation. Dabei ist der erste Zustand messbar verschieden vom zweiten Zustand aufgrund einer geänderten Wechselwirkung zwischen Kollisionsgegenstand und Flüssigkeitsstrahl.

Die erfindungsgemässe Vorrichtung kann Teil einer Bearbeitungsmaschine sein. Zur Bearbeitungsmaschine gehört eine Vorrichtung mit einer Flüssigkeitsdüse zum Erzeugen eines zu positionierenden Flüssigkeitsstrahls. Zudem ist vorzugsweise eine Laserstrahleinkopplung vorhanden zum Einkoppeln eines Laserstrahls in den Flüssigkeitsstrahl. Die Lasereinkopplung in den Flüssigkeitsstrahl kann, wie in der EP 0 762 947 B1 (Synova) beschrieben, ausgeführt sein.

Der Kollisionsgegenstand ist zum Beispiel ein Formstück aus Metall mit mindestens einer Kante zur Wechselwirkung mit dem Flüssigkeitsstrahl. Das Formstück kann zum Beispiel ein Rahmen mit einer zentralen Ausnehmung sein. Am Rahmen können ein bis vier Messstellen ausgebildet sein. Vorzugsweise liegen jeweils zwei Messstellen auf einer Achse in x- oder y-Richtung einander gegenüber.

Der Kollisionsgegenstand kann auch Messstellen auf verschiedenen Ebenen aufweisen. Die Ausnehmung kann dabei auf einer von den Messstellen getrennten Ebene angeordnet sein.

Der Kollisionsgegenstand hat zum Beispiel eine Spitze oder Ecke zur Wechselwirkung mit dem Flüssigkeitsstrahl. Die Spitze bildet dabei eine Messstelle. Die Spitze ist zum Beispiel in einem plattenförmigen oder rahmenförmigen Teil des Kollisionsgegenstands in der Art einer Pfeilspitze ausgebildet. Der plattenförmige Teil ist dabei vorzugsweise senkrecht zur Richtung des Flüssigkeitsstrahls ausgerichtet, das heisst, die Spitze steht quer zum Flüssigkeitsstrahl.

Bei einer besonderen Ausführungsform besitzt die Vorrichtung eine optische Einheit zur Einkopplung von Messlicht in den Flüssigkeitsstrahl, so dass der Messlichtstrahl durch den Flüssigkeitsstrahl in der Art eines Wellenleiters geführt wird, und dass der Zustand des Flüssigkeitsstrahls mit einer geeigneten Messung ermittelt werden kann. Die Frequenz des Messlichts kann irgendeine geeignete aus dem elektromagnetischen Spektrum sein. Dies ist je nach Materialwahl und Messverfahren eine Strahlung mit einer Wellenlänge zwischen den Grössenordnungen 0.1 nm und 1 mm.

Der Kollisionsgegenstand kann einen platten- oder rahmenförmigen Teil aufweisen, an welchem mindestens eine Messstelle ausgebildet ist. Der genannte Teil definiert zum Beispiel eine Messebene der Vorrichtung. Es können auch mehrere, auf unterschiedlicher Höhe angeordnete, platten- oder rahmenförmige Teile mit zugehörigen Messstellen vorgesehen sein.

Bei einer weiteren Ausführungsform ist in starrer räumlicher Lage bezüglich des Kollisionsgegenstandes eine reflektierende Oberfläche vorgesehen, die geeignet ist, zumindest einen Teil eines Messlichts zurück in den Flüssigkeitsstrahl zu koppeln. Die Oberfläche definiert eine Referenzebene und ist typischerweise am Kollisionsgegenstand selbst vorgesehen. Sie hat eine starre räumliche Beziehung zu den Messstellen am Kollisionsgegenstand.

Die reflektierende Oberfläche liegt, in Ausbreitungsrichtung des Flüssigkeitsstrahls betrachtet, mit Vorteil hinter einer Messebene der Vorrichtung. Es ist aber auch möglich, die reflektierende Oberfläche in der Messebene zu platzieren. Beispielsweise kann die Messstelle durch einen Spalt oder eine Vertiefung in einer Referenzplatte realisiert sein. Wenn der Wasserstrahl von der Referenzebene auf den Spalt übergeht, verändert sich der Zustand des Wasserstrahls, was zum Beispiel mit Messlicht, das in den Wasserstrahl eingekoppelt ist, detektiert werden kann.

Der Kollisionsgegenstand weist mindestens eine Messstelle, insbesondere mindestens eine scharfe Kante, auf, und ist aufgrund seiner präzisen Fertigung und Materials für ein Verfahren gemäss der Erfindung geeignet. Die Messstelle kann auch eine andere Oberflächenunstetigkeit sein. Im Querschnitt kann die Messstelle zum Beispiel neben dem spitzen Winkel auch eine rechteckige Form oder einen stumpfen Winkel aufweisen. Der Kollisionsgegenstand kann zudem eines oder mehrere der bereits beschriebenen Merkmale aufweisen:

- eine Ausnehmung geeignet für den Durchtritt eines Wasserstrahls;
- eine Mehrzahl, insbesondere vier, Messstellen zur Wechselwirkung mit einem Flüssigkeitsstrahl;
- eine Referenzplatte, die reflektierend für ein im Flüssigkeitsstrahl geführtes Messlicht ist;
- zwei oder mehr Messebenen mit zugehörigen Messstellen (zum Beispiel mindestens zwei Messstellen pro Messebene);
- Befestigungsmittel zum Fixieren des Kollisionsgegenstands auf einem Werkstückhalter, die Befestigungsmittel können Gewindebohrungen sein;
- Positionierelemente (Nuten, Rippen etc.) zum mikrometergenauen Positionieren des Kollisionsgegenstands auf dem Werkstück oder dem Werkstückhalter.

Die Erfindung definiert auch eine Verwendung eines Kollisionsgegenstandes gemäß Anspruch 23.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1a-c    Die drei Zustände des Flüssigkeitsstrahls.

Fig. 2a-f    Ausführungsbeispiele des Kollisionsgegenstands mit allen Messkanten in einer Ebene.

Fig. 3a-c    Ausführungsbeispiele des Kollisionsgegenstandes mit Messkanten auf zwei Ebenen.

Fig. 4a-b    Grundsätzlichen Aufbau einer Maschine zur Werkstückbearbeitung mit einem Laser der von einem Flüssigkeitsstrahl geleitet wird.

Fig. 5    Eine Ausführungsform eines Messsystems, in dem der Bearbeitungslaser zur Messung des Zustandes des Flüssigkeitsstrahls genutzt wird.

Fig. 6    Intensität des reflektierten Lichts als Funktion der Konstellation von Flüssigkeitsstrahl und Kollisionsgegenstand.

Fig. 7a-d    Geometrische Skizzen zur Herleitung der Interpretation der Messergebnisse.

Fig. 8a-b    Illustrationen zum Messprinzip.

Grundsätzlich sind in den Figuren gleiche Teile mit gleichen Bezugzeichen versehen.

**Wege zur Ausführung der Erfindung**

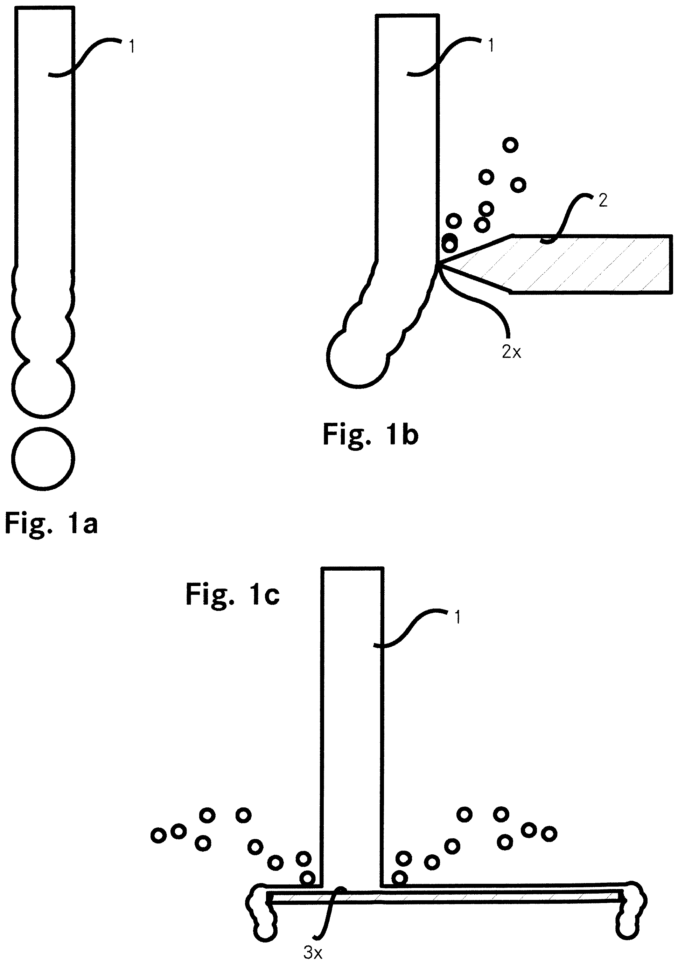

Figur 1a zeigt schematisch einen Flüssigkeitsstrahl 1 im freien Zustand. Der Strahl wird durch eine Düse erzeugt, die in einer Weise ausgebildet ist, dass ein laminarer Strahl entsteht. Der Flüssigkeitsstrahl 1 kann zwecks Stabilisierung in an sich bekannter Weise mit einem Gasstrahl umhüllt werden. Aufgrund seiner Laminarität kann der Flüssigkeitsstrahl als optischer Leiter für einen materialbearbeitenden Laserstrahl dienen, wenn die Flüssigkeit zum Beispiel Wasser ist. In einiger Entfernung (von zum Beispiel dem hundertfachen des Durchmessers des Flüssigkeitsstrahls) zerfällt er in einzelne Tropfen und ist damit beispielsweise nicht mehr fähig, als optischer Leiter zu dienen (weitere Einzelheiten über die Länge des Flüssigkeitsstrahls können zum Beispiel der EP 1 833 636 B1 (Synova) entnommen werden). Im Folgenden wird nur derjenige Teil des Flüssigkeitsstrahls betrachtet, der laminar ist.

Figur 1b zeigt die Situation, wenn der Flüssigkeitsstrahl 1 auf eine Kante 2x eines Kollisionsgegenstands 2 trifft. Selbst wenn die Kante 2x nur wenig in den Flüssigkeitsstrahl 1 eindringt, so wird dieser abgelenkt. Dringt die Kante 2x weiter in den Flüssigkeitsstrahl 1 ein, wird der Strahl irgendwann zerfallen. Beispielsweise lösen sich Tropfen vom Flüssigkeitsstrahl 1 und der Strahl verliert seine Laminarität. Der Zustand eines Flüssigkeitsstrahls 1, der von einer Kante verändert worden ist, wird im Folgenden als "gestört" bezeichnet.

In Figur 1c trifft der Flüssigkeitsstrahl 1 vollständig auf eine ebene Fläche 3x eines Kollisionsgegenstandes 2. Der Strahl 1 findet damit sein Ende und zerfällt in Tröpfchen und bildet eine Flüssigkeitsschicht auf der ebenen Fläche 3x. Diesen Zustand eines Flüssigkeitsstrahls 1 wird im Folgenden als "ungestört" (man könnte auch sagen "gezielt limitiert") bezeichnet.

Prinzipiell stört jeder Kollisionsgegenstand 2, der einen Flüssigkeitsstrahl 1 berührt, diesen. Für eine genaue Messung, die auch möglichst unempfindlich gegenüber Unsicherheiten im Einfallswinkel 31 des Flüssigkeitsstrahls 1 sein soll, empfehlen sich aber scharfe Kanten 2x als Messstellen. Wird eine präzise Positionierung erwünscht, soll sich der Kollisionsgegenstand 2 möglichst wenig unter dem Druck des Flüssigkeitsstrahls 1 oder anderen Effekte verformen. Daher wird der Kollisionsgegenstand 2 möglichst massiv gefertigt, so dass alle Messstellen am Kollisionsgegenstand 2 eine starre Relation zueinander haben.

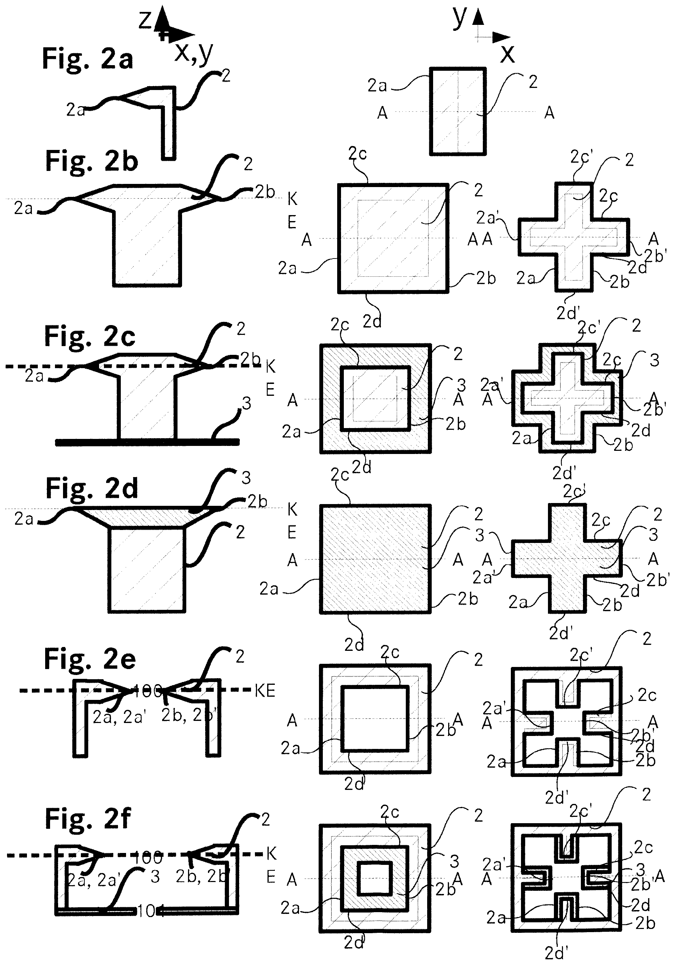

Figur 2a zeigt einen Querschnitt durch einen einfachen Kollisionsgegenstand 2 und die Aufsicht. Es handelt sich hier um eine Kante 2a die mit einem Abstandhalter in einem gewissen Abstand zu einer Standfläche befestigt ist. Die Kante 2a ist im Querschnitt spitzwinklig (das heisst, die aufeinander stossenden Oberflächen schliessen einen Winkel von maximal 90° ein) und hat in einer Richtung (in Figur 2a: senkrecht zur Zeichenebene), die im Wesentlichen senkrecht zur späteren Ausbreitungsrichtung FS des Flüssigkeitsstrahls 1 ist, eine gewisse Ausdehnung von zum Beispiel mindestens dem zehnfachen Durchmesser des Flüssigkeitsstrahls 1.

Für die Messung geschieht die Konstellationsänderung in BE möglichst senkrecht zur Ausdrehungsrichtung und im Wesentlichen senkrecht zur Ausbreitungsrichtung FS des Flüssigkeitsstrahls 1. Diese Richtung wird im Folgenden "Messrichtung" genannt.

Die ausreichend grosse Ausdehnung erlaubt es, eine Wechselwirkung mit dem Flüssigkeitsstrahl 1 zu erreichen, ohne dass dessen Position in Ausdehnungsrichtung genau bekannt sein muss.

Detektiert man eine Störung des Flüssigkeitsstrahls 1 durch die Kante 2x, so erhält man daraus folgende Informationen: Ein Teil des Strahls 1 befindet sich in einer Konstellation, von der aber die Koordinate in Ausdehnungsrichtung unbekannt ist. Mit einer analogen Messung kann die Konstellation in einer zweiten Richtung welche im Wesentlichen senkrecht zu dem Flüssigkeitsstrahl 1 ist und mit der ersten Richtung eine Ebene definiert, bestimmt werden. Dies kann entweder durch eine Drehung des Kollisionsgegenstands 2 um einen Winkel ungleich n x 180° (n: ganze Zahl und Null) um eine Achse, die im Wesentlichen parallel zur Flüssigkeitsstrahlausbreitungsrichtung FS ist, geschehen oder durch eine zweite Kante 2b am Kollisionsgegenstand, die mit der ersten Kante 2a einen Winkel von ungleich n x 180° einschliesst. So lässt sich die zweite Koordinate bestimmen. Es ist dabei zu beachten, dass bei der zweiten Messung natürlich nicht dieselbe Stelle am Flüssigkeitsstrahl 1 ermittelt wird (weil die Berührungspunkte des Kollisionsgegenstands 2 auf der Mantelfläche des Flüssigkeitsstrahl 1 gegeneinander verdreht liegen).

Aus praktischen Gesichtspunkten ist man häufig mehr an dem Strahlmittelpunkt und seinem Querschnittsdurchmesser interessiert als an einer Grenzfläche des Flüssigkeitsstrahls 1. Um den Mittelpunkt und den Durchmesser zu messen, sind weitere Messungen notwendig. Ein übliches Verfahren ist, dass entlang derselben Messachse eine Wechselwirkung an einer ersten Seite des Flüssigkeitsstrahls 1 und eine Wechselwirkung an der gegenüberliegenden, zweiten Seite des Flüssigkeitsstrahls 1 gemessen wird. Die Differenz zwischen der bekannten Strecke zwischen den beiden Wechselwirkungspositionen (22a, b) und der gemessenen Strecke zwischen den beiden Wechselwirkungen (23a, b) ist gleich dem Strahldurchmesser in Richtung der Messachse. Dabei wurde die Annahme getroffen, dass der Strahl 1 senkrecht auf die Ebene der beiden verwendeten Messkanten KE trifft (es kann sich hier natürlich auch um nur eine verschobene Kante handeln). Später wird erläutert, wie dieser Einfallswinkel 31 gemessen werden kann. Mit diesem Wissen können dann die geforderten Korrekturen angebracht werden, wenn der Strahldurchmesser in einer solchen Präzision gefragt ist.

Für die Messung einer Position eines Strahls 1 mit rundem Querschnitt sind also mindestens drei Messungen notwendig. Ein Kollisionsgegenstand 2 mit nur einer Kante 2a muss dafür zweimal gedreht werden (nämlich um einen Winkel zwischen 0° und 180°, zum Beispiel 90°, und um 180°).

Die Drehung des Kollisionsgegenstands 2 und/oder des Flüssigkeitsstrahls 1 lässt sich vermeiden, in dem ein Kollisionsgegenstand 2 verwendet wird, der mindestens drei Kanten 2a-c in der geforderten Anordnung zueinander aufweist (0°, 0°<x<180°, 180°).

Die Figuren 2b-f zeigen weitere Formen für den Kollisionsgegenstand 2. Zwei Kanten 2a, b liegen sich gegenüber und sind daher im Querschnitt zu erkennen. Eine dritte Kante 2c kann unterschiedlich angeordnet sein und so ergeben sich verschiedene Aufsichten. In Figur 2b-f sind jeweils zwei Möglichkeiten gezeigt. Die erste ist eine ganz symmetrische, mit quadratischer oder rechteckiger Aufsicht. Dies hat den Vorteil, dass die Messkanten 2a-d relativ lang sind, so dass auch mit nur wenig Vorwissen über die Konstellation eine Messung durchführbar ist. Ein Vieleck hat den Vorteil, dass die Querschnittform des Strahls 1 präziser gemessen werden kann, aber den Nachteil, dass die Kantenlänge abnimmt und damit schon eine recht genaue Schätzung der Konstellation vorliegen muss. Eine Kreuzform oder eine Ecke (ein in der Diagonale geteiltes Kreuz) hat den Vorteil, dass es relativ lange Kanten aufweist, aber nur eine geringe Fläche beansprucht. Es ist von Vorteil, wenn der Kollisionsgegenstand 2 nur eine geringe Fläche hat, da so die auftreffende Flüssigkeit gut abfliessen kann.

Die Kanten 2x sind jeweils an Abstandhaltern befestigt. Diese Abstandhalter müssen stabil und fest genug sein, um die Kanten 2x auch unter Messbedingungen in Position zu halten. Die Abstandhalter können dafür einen beliebigen Durchmesser haben und aus jedem geeigneten Material bestehen. Sie können massiv oder hohl sein und auch Befestigungsmöglichkeiten wie z.B. Gewinde aufweisen. Solche Befestigungsmöglichkeiten müssen aber so gestaltet sein, dass sie die Messung nicht beeinträchtigen. Flüssigkeit muss also geeignet abfliessen können und die Befestigungsmöglichkeiten dürfen nicht die Kanten 2x beeinträchtigen und sollten soweit von den Kanten 2x entfernt sein, dass sie in den Messergebnissen nicht mit Kanten 2x verwechselt werden können. Die Abstandhalter sollen die Kanten 2x so weit von der Befestigungsebene fernhalten, dass die Ablenkung und Störung des Strahls deutlich genug für die verwendete Messmethode erkennbar ist. Wie gross genau dieser Abstand ist, hängt von der Messmethode, dem Strahl 1, dem Kantenöffnungswinkel und der Wechselwirkung zwischen Material und Flüssigkeit ab und wird vermutlich am besten im Experiment geklärt.

Figur 2b stellt einen sehr einfachen Kollisionsgegenstand 2 mit vier Kanten 2a-d dar. Der Gegenstand ist um seine Hochachse symmetrisch. Die Kanten 2a-d liegen aussen um den Abstandhalter herum. Das erlaubt eine stabile und präzise Fertigung. Nachteilig ist, dass aussen liegenden Kanten 2a-d in der Benutzung eher Verschleiss ausgesetzt sind und in der Handhabung ein gewisses Verletzungsrisiko bilden.

Figur 2c ist eine Weiterentwicklung von Figur 2b, in der zusätzlich eine reflektierende Referenzfläche 3 vorgesehen ist. Diese befindet sich auf einem anderen Niveau (nämlich auf einer tieferen Ebene) als die Messkanten 2a-d. In Figur 2c erstreckt sie sich über den ganzen Bereich, der unter den Messkanten 2a-d liegt. Somit ist unter jeder zum Messen verwendeten Kante 2a-d eine reflektierende Oberfläche. Die Referenzfläche 3 bringt für verschiedene Messmethoden Vorteile.

Eine andere Ausführungsform ist in Figur 2d gezeigt. Hier sind zum einen die Kanten 2a-d nicht symmetrisch im Querschnitt. Dies soll zeigen, dass das Verfahren nicht auf symmetrische Kanten beschränkt ist. Auch alle anderen asymmetrischen Kanten sind möglich. Wie oben schon erwähnt wird eigentlich überhaupt keine Kante benötigt. Kanten sind nur wegen ihrer guten Vermessbarkeit bevorzugt. Benutzt man ein Messverfahren, welches eine reflektierende Referenzfläche 3 benötigt, so kann diese auch oben auf dem Kollisionsgegenstand 2 angebracht sein. In diesem Fall muss aber entweder das reflektierende Material 3 gerade bei den Kanten beginnen, oder man verzichtet ganz auf die Kanten 2x und benutzt einfach nur eine reflektierende Fläche 3 von bekannten Ausmassen. In beiden Fällen wird das Messverfahren allerdings erschwert, da nun der Beginn eines graduellen Anstiegs in dem Signal erkannt werden muss und nicht ein plötzlicher Abfall oder ein lokales Minimum. Vermutlich ist daher für diese Methode in Verbindung mit dem in Figur 2d beschriebenen Kollisionsgegenstand 2 in den Varianten mit reflektierenden Flächen 3 ein feineres Sampling notwendig, um eine vergleichbare Auflösung zu erreichen. Alternativ kann auch der Kollisionsgegenstand 2 von Figur 2d auf einer reflektierenden Fläche 3 angebracht werden, analog zu Figur 2c). Dann würden die Kanten 2a-d in einer Messmethode, die reflektiertes Messlicht nutzt, als lokales Minimum in der Intensität auftauchen.

Die Aufsicht kann aus einer der oben beschriebenen Varianten gewählt werden.

In den Figuren 2e und 2f ist der Kollisionsgegenstand 2 im Wesentlichen rahmenförmig. Das heisst, es ist ein zentraler Freiraum 100 vorhanden, der von vier Messkanten 2a-d umgeben ist. Die Messkanten 2a-d liegen also auf der Innenseite des rahmenförmigen Kollisionsgegenstands 2. Die Aussenseite des Kollisionsgegenstands 2 hat messtechnisch keine Funktion.

Figur 2e zeigt eine Variante ohne reflektierende Flächen 3. Die Diskussion um die Anordnung der Kanten 2x ist analog zu der in der Beschreibung von Figur 2b. In der Kreuz-Aufsicht ragen hier mit Kanten 2x versehene Quader in den Freiraum 100. Die Quader berühren sich dabei nicht. Jeder Quader weisst drei Kanten auf, die sich als Messkanten 2x eignen. Zwei davon, 2a, b, liegen sich jeweils gegenüber. Um die Minimalanzahl an Kanten zu haben, reichen also zwei über Eck angeordnete Quader aus. Allerdings ist ein symmetrischer Körper bevorzugt. Der Abstandhalter hat hier jetzt die Form eines Rahmens. Bezüglich Fertigung und Eigenschaften und Grösse gelten dieselben Anforderungen wie bei den Figuren 2a-d.

Figur 2f schliesslich zeigt die Erweiterung von 2e um die reflektierende Referenzfläche 3. Hier liegt die reflektierende Referenzfläche 3 jetzt unterhalb des Freiraums 100 und somit innerhalb des Kollisionsgegenstands. Sie hat zum Beispiel im Zentrum eine Öffnung 101, um Flüssigkeit abfliessen zu lassen ohne die Messung zu behindern.

Mit den oben beschriebenen Formen lässt sich die Konstellation von Flüssigkeitsstrahl 1 und Kollisionsgegenstand 2 in einer Ebene bestimmen. Und zwar in der Ebene, die durch die Konstellationsänderung aufgespannt wird. Diese Ebene wird im Folgenden "Bewegungsebene" BE genannt. Nun kann es von Interesse sein, auch die Winkellage des Flüssigkeitsstrahls, also den Winkel zwischen Flüssigkeitsstrahl und Bewegungsebene BE, den wir im Folgenden Strahlwinkel 32 nennen, und den Winkel zwischen Kantenebene KE und Flüssigkeitsstrahl, also den Einfallswinkel 31, zu ermitteln.

Nicht immer tritt der Flüssigkeitsstrahl 1 senkrecht zur Bewegungsebene BE_D des strahlerzeugenden Elements aus. Es ist auch nicht von vornherein sicher, dass die Kantenebene KE parallel zur Bewegungsebene BE_G des Kollisionsgegenstands 2 ist (Fall 1). Weiter ist es möglich, dass die Bewegungsebene des strahlerzeugenden Elements BE_D nicht parallel zur Kantenebene KE ist (Fall 2). Natürlich können sich verschiedene Effekte kumulieren.

Die Winkellage des Flüssigkeitsstrahls lässt sich also durch vier Winkel erfassen:

(a) durch den Winkel zwischen der Bewegungsebene des strahlerzeugenden Elements BE_D und dem Flüssigkeitsstrahl FS in einer Richtung in der Bewegungsebene BE_D . Das ist der eine Strahlwinkel 32.1. (Oder, wenn der Gegenstand bewegt wird, dem Winkel zwischen der Normalen der Kantenebene KE und der Bewegungsebene des Kollisionsgegenstands BE_G)

(b) durch einen zweiten Strahlwinkel 32.2 in eine zweite Richtung, so dass die Bewegungsebene BE aufgespannt wird ;

(c) den Winkel zwischen der Normale der Kantenebene KE und der Ausbreitungsrichtung des Flüssigkeitsstrahls FS in einer Richtung in der Bewegungsebene BE. Das ist ein Einfallswinkel 31.1.

(d) durch einen zweiten Einfallswinkel 31.2 in eine zweite Richtung, so dass die Bewegungsebene BE aufgespannt wird.

Im weiteren Verlauf wird der Übersichtlichkeit halber nur die Winkelmessung in einer Richtung behandelt und nur der Fall, dass die eigentlichen Positionsmessungen durch Verschiebung des Flüssigkeitsstrahls durchgeführt werden. Der Kollisionsgegenstand kann verschoben werden aber nur, um die Kanten neu zu positionieren und nicht um die eigentliche Messung durchzuführen. So kann ein Kollisionsgegenstand 2 mit nur einer Kante 2a die Funktion eines Kollisionsgegenstandes 2 mit drei oder mehr Kanten 2x auf mehreren Kantenebenen KE übernehmen. Oder auch ein Kollisionsgegenstand mit Kanten 2a-d in nur einer Kantenebene KE kann die Kantenebene KE wechseln und damit die vollständige Messung ermöglichen. Die Messung in die andere Richtung funktioniert analog. Die Messmethode, bei der der Kollisionsgegenstand zu Messzwecken verschoben wird, funktioniert ebenfalls analog.

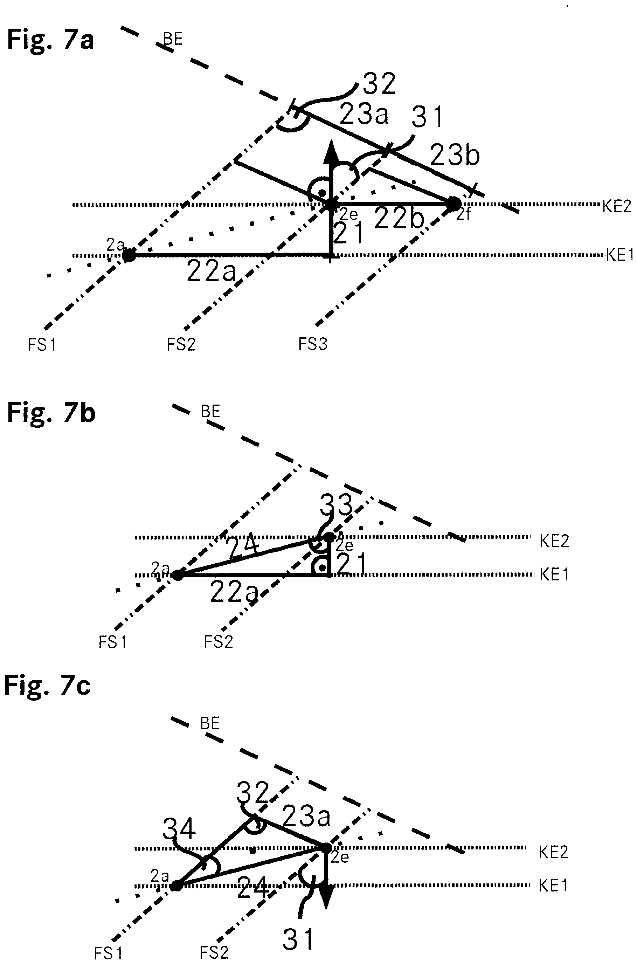

Die Messmethode und die Auswertung der Messungen wird anhand Figur 7a) --e) in zwei Dimensionen beschrieben. Dort wird deutlich, dass alle gewünschten Winkel und damit alle Werte die gebraucht werden, um in ein beliebiges Gerätekoordinatensystem zu wechseln, dadurch bestimmt werden können, dass drei geeignete Punkte vermessen werden. Die folgenden Daten werden benötigt: die Abstände der drei Punkte (2a,e,f) voneinander entlang einer Geraden (KE), die durch zwei der Punkte (2e,f) definiert wird (22a,b) und den Abstand des dritten Punkts (2a) senkrecht zu dieser Geraden (21), und die Verschiebung des strahlerzeugenden Elements zwischen den Messsignalen, die eine Wechselwirkung zwischen Flüssigkeitsstrahl und Kanten anzeigen (23a,b). Für die Winkelbestimmung ist es nicht nötig, mit dem Flüssigkeitsstrahlmittelpunkt zu rechnen. Es ist dann aber darauf zu achten, dass immer derselbe Teil der Mantelfläche des Flüssigkeitsstrahls 1 die Wechselwirkung auslöst.

Eine einfache Art, präzise und mit möglichst wenig Verstellen am Versuchsaufbau die nötigen Messdaten zu bekommen, liegt darin, einen Kollisionsgegenstand 2 zu verwenden, der mehrere Messkanten 2x aufweist, von denen jeweils zwei sich gegenüber liegen (z.B. 2a und 2b oder 2c und 2d). In der ersten Messebene KE1 befinden sich vorzugsweise vier Messkanten (2a, b, c, d). Eine ähnliche Anordnung wird in einer zweiten Messebene KE2.

Anstelle von jeweils zwei sich gegenüberliegenden Kanten (Kantenpaare), die eine Kantenebene KE aufspannen, kann es sich auch nur um drei Kanten pro Kantenebene handeln, von denen nur zwei sich gegenüberliegen. Die dritte spannt mit den beiden ersten Kanten die Kantenebene KE auf. Auch kann in der zweiten Kantenebene KE2 komplett auf die Kantenpaare verzichtete werden. Schliesslich ist es auch möglich, überhaupt keine Kantenpaare, sondern nur vier Messkanten zu verwenden, die erst durch eine Drehung des Gegenstands zwei verschiedene parallele Ebenen KE1 und 2 aufspannen. In diesem letzten Fall lassen sich dann aber der Strahldurchmesser und sein Mittelpunkt nur mit Hilfe einer Drehung des Kollisionsgegenstands oder des strahlerzeugenden Elements bestimmen. Wenn nur eine einzige Messkante vorgesehen ist, braucht es entsprechend mehr Positionsänderungen, da alle nötigen Kantenpositionen mit Hilfe dieser einen Kante durchgemessen werden müssen.

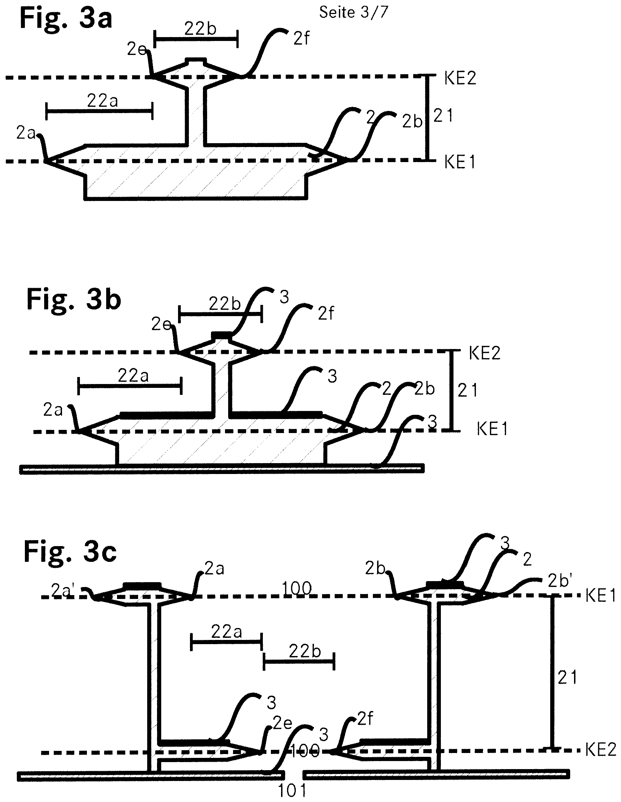

Drei Ausführungsbeispiele für Kollisionsgegenstände 2, die eine ausreichende Anzahl und geeignete Anordnung von Messkanten 2x aufweisen, um alle nötigen Messungen ohne Verschiebung und Drehung des Kollisionsgegenstands durchzuführen, sind in Figur 3 a -c gezeigt.

Figur 3a zeigt eine Form, die sich nur für Messmethoden eignet, welche nicht auf reflektierende Oberflächen angewiesen sind. Die Figur 3a zeigt nur den Querschnitt. Die Aufsicht kann analog zu den Beispielen und Variationen in Figur 2 und den Erklärungen zu diesen Figuren gewählt werden.

Der Kollisionsgegenstand 2 hat zwei parallele Kantenebenen KE1 und KE2, die jeweils durch 3 bis 4 Kanten 2x gebildet werden. Die Kanten 2a-d der unteren Kantenebene KE1 liegen dabei weiter voneinander entfernt als die Kanten 2e-f der oberen Kantenebene KE2. Der Abstand in Richtung der Kantenebene zwischen Kanten der oberen Ebene KE2 und denen der unteren Ebene KE1 sollte dabei so gross sein, dass alle Kanten 2x als solche erfasst werden können und zwar bei allen anzunehmenden Einfallswinkeln 31 des Flüssigkeitsstrahls 1. Der Abstand sollte typischerweise mehr als ein Strahldurchmesser und vorzugsweise mehr als 10 Strahldurchmesser gross sein. Die Fläche vor der Kante treffen. Damit ergibt sich folgender minimale Abstand '22a'$_{min}$ :

$$'22a'_{min} = \frac{\sin('31'_{max})\,'21' + d}{\cos('31'_{max})}$$

Dabei ist d der Flüssigkeitsstrahldurchmesser und '31'$_{max}$ der grösste anzunehmende Einfallswinkel. Die Form der Befestigung der Kanten 2a-d an dem Abstandhalter kann beliebig gewählt werden, solange sich noch die Wechselwirkung mit den Kanten 2x zweifelsfrei feststellen lässt. Der Abstandhalter sorgt dafür, dass die Wechselwirkung an den Kanten 2a-d) der Kantenebene KE1 soweit ausgeprägt ist, dass sie sich messen lässt, bevor der gestörte Strahl auf eine evtl. vorhandene Unterlage trifft. Dafür muss der Abstandhalter zum einen hoch genug sein und zum anderen schmal genug, dass der abgelenkte Strahl nicht mit dem Abstandhalter kollidieren kann, bevor seine Ablenkung gemessen werden konnte. Der Abstandhalter, die Kanten und die Befestigung der Kanten müssen stabil genug sein, um sich nicht unter dem Flüssigkeitsstrahl übermässig zu verbiegen oder aus anderen Gründen die Positionierung der Kanten (21, 22a,b) zueinander zu verändern in einem Mass grösser als die gewünschte Messgenauigkeit. Der Abstandhalter sollte nicht so weit über die Kanten hinwegreichen, dass Kanten bei einem zu erwarteten Einfallswinkel 31 durch den Abstandhalter an der Wechselwirkung mit dem Flüssigkeitsstrahl gehindert werden. Diese Anforderung gilt auch für den Abstand der Kantenebenen KE1 und KE2 voneinander. Soll der Abstandhalter oder der Abstand der Kantenebenen sehr gross sein, so muss der Abstand der Kanten in der Kantenebene entsprechend angepasst werden.

Figur 3b zeigt eine Variante, die für Messungen geeignet ist, die auf reflektierende Oberflächen 3 angewiesen sind. Hier befindet sich unter dem Kollisionsgegenstand 2 eine reflektierende Fläche 3 als Referenzebene. Eine zweite reflektierende Fläche 3 befindet sich auf der Fläche zwischen der Kantenebene KE1 und KE2. Schliesslich gibt es noch eine dritte reflektierende Fläche 3 auf der Befestigung der oberen Kanten 2e-h. Dies ist eine Möglichkeit, um zum Beispiel zu prüfen, dass der Flüssigkeitsstrahl 1 auch tatsächlich die oberen Kanten 2e-h wie gewünscht vermessen hat. Auf diese reflektierende Fläche 3 kann aber auch verzichtet werden. Auch die anderen reflektierenden Flächen können reduziert werden. Sie müssen nicht die gesamte Fläche der Kantenbefestigung bedecken. Für eine gute Messung muss einfach der Übergang "reflektierende Fläche zu Messkante" messbar sein. In einer Ausführungsform besteht der ganze Kollisionsgegenstand aus reflektierendem Material. In einer anderen Ausführungsform ist er komplett mit reflektierendem Material beschichtet, wobei die relative Position der Kanten aber weiterhin präzise bekannt ist. Für den Abstandhalter gilt dasselbe wie in Figur 3a.

Figuren 3a und 3b haben die Messkanten 2x auf der Aussenseite. Es ist natürlich auch möglich, die Messkanten 2x an der Innenseite anzubringen. Dies ist in Figur 3c gezeigt. Neben den nach innen zeigenden Messkanten 2a-h auf zwei unterschiedlichen Kantenebene KE1 und KE2 sind auch zwei Kanten 2a' und 2b' auf der Aussenseite gezeigt. Diese bieten einfach mehr Messstellen und können damit eine genauere Messung ermöglichen. Sie werden aber nicht unbedingt gebraucht und können auch weggelassen werden.

Es könnten aber stattdessen auch die inneren Kanten 2a und 2b derselben Kantenebene KE1 weggelassen werden. Wenn die Aussenkanten 2a',2b' weggelassen werden, kann die unterste reflektierende Fläche 3 kleiner gewählt werden. Die reflektierenden Flächen 3 auf der Befestigung der obersten Kantenebene KE1 kann ebenfalls weggelassen werden. Ist sie da, lassen sich so ebenfalls Kontrollwerte erhalten. So könnte man zum Beispiel die Länge der Strecke auf der Messlicht reflektiert wird, in Messung und Theorie vergleichen und damit grobe Fehler in der Ausrichtung erkennen.

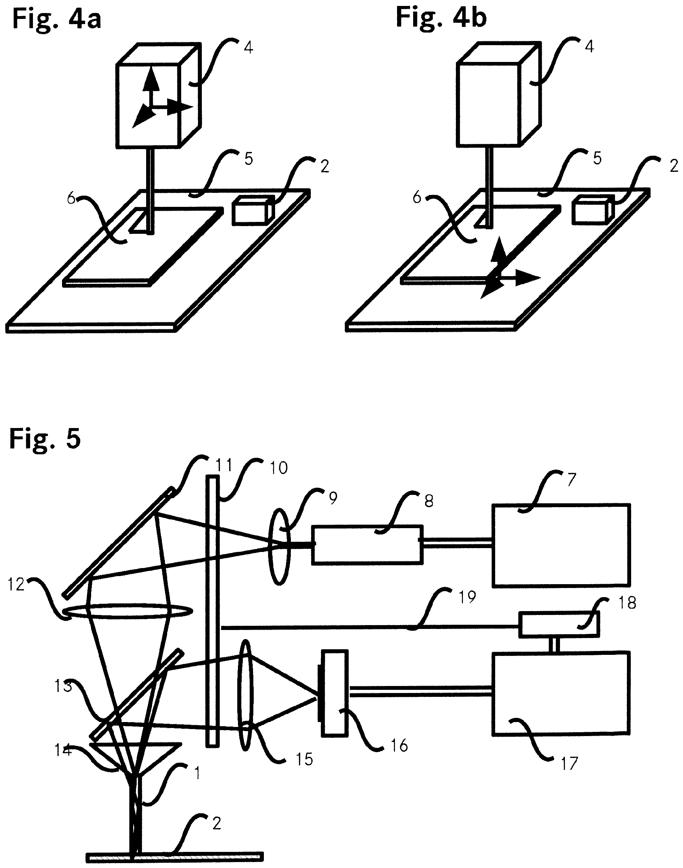

Figur 4a, b verdeutlicht das Messverfahren. In Figur 4a wird der Fall gezeigt, dass sich das flüssigkeitsstrahlerzeugende Element 4 (zum Beispiel der Bearbeitungskopf einer Maschine) verschieben lässt. Das Werkstück 6 liegt auf einer Werkstückhalterung 5. Auf dieser ist der Kollisionsgegenstand 2 befestigt, der zur Kalibrierung dient. Alternativ kann der Kollisionsgegenstand 2 auch auf dem Werkstück 6 befestigt sein. Andere Möglichkeiten sind ein Mikrometertisch oder eine Position abseits der Abspannvorrichtung 5. Schliesslich ist es auch möglich die Aussenkanten der Abspannvorrichtung selbst oder Teile davon passend zu gestalten. In jedem Fall muss der Flüssigkeitsstrahl aber den Kollisionsgegenstand erreichen können und zwar noch bevor der Flüssigkeitsstrahl, wie in Fig. 1a gezeigt, zerfällt.

Bei geeigneter Dimensionierung des Kollisionsgegenstands 2, des Werkstücks 6 und der Anbringung des Kollisionsgegenstands 2 ist es aber nicht zwingend nötig, dass sich das flüssigkeitsstrahlerzeugende Element 4 in mehr als einer Ebene bewegt. Es darf sich aber nicht um eine Ebene handeln in der die Ausbreitungsrichtung des Flüssigkeitsstrahls FS liegt.

In Figur 4b wird das strahlerzeugende Element ortsfest gehalten und die Abspannvorrichtung 5 mit dem darauf befestigten Kollisionsgegenstand 2 bewegt. Alternativ kann der Kollisionsgegenstand 2 auch am Werkstück 6 befestigt sein und dieses bewegt werden.

Ist der Kollisionsgegenstand 2 auf einem Mikrometertisch oder einer anderen Befestigung befestigt, mit der sich seine Position ändern kann, so kann auch nur der Kollisionsgegenstand 2 bewegt werden und Flüssigkeitsstrahl 1 und Abspannvorrichtung 5 und Werkstück 6 bleiben fest.

In allen Fällen muss die mögliche Relativbewegung gross genug sein und die Positionierung des Kollisionsgegenstandes 2 so gewählt sein, dass alle nötigen Messstellen am Kollisionsgegenstands 2 erfasst bzw. mit dem Flüssigkeitsstrahl 1 in Wechselwirkung gebracht werden können.

Figur 5 zeigt eine mögliche Ausführungsform eines Messsystems, welches die Reflektionseigenschaften des Kollisionsgegenstands 2 nutzt. Im Folgenden ist mit "Licht" jede elektromagnetische Strahlung zu verstehen, die im Flüssigkeitsstrahl 1 geführt werden kann. Das ist typischerweise Strahlung im Wellenlängenbereich der Grössenordnungen 0.1 nm bis 1 mm.

Eine Lichtquelle 8, bevorzugt ein Laser und bevorzugt der Laser, der sich auch für eine Werkstückbearbeitung eignet, wird mit Hilfe einer Spannungsquelle 7 betrieben. Mit einer Linse 9 wird der Lichtstrahl aus der Lichtquelle 8 aufgeweitet. Der aufgeweitete Lichtstrahl wird im Messmodus durch Filter eines Filterrades 10 geleitet, um ihn abzuschwächen. So wird der Kollisionsgegenstand 2 durch die Messung nicht zerstört. Handelt es sich bei der Lichtquelle 8 nicht um einen Laser oder um einen Laser, dessen Leitung gering genug ist, so sind die Aufweitungslinse 9 und der Filter nicht notwendig und können weggelassen werden.

Der Lichtstahl wird über einen Ablenkspiegel 11 in eine Linse 12 gelenkt, die ihren Fokus an der Düse der Flüssigkeitskammer 14 hat. Nach der Linse 12 passiert der Lichtstrahl einen halb-durchlässigen Spiegel 13, der das von oben einfallende Licht möglichst wenig abschwächt. Es ist allerdings auch möglich diesen Spiegel 13 anstelle der Linsen-Filter-Kombination (9, 10) zur Abschwächung eines leistungsstarken Lasers zu verwenden. Das Licht wird also innerhalb der (nur schematisch gezeigten) Flüssigkeitskammer 14 in dem Düseneingang fokussiert und damit in den Flüssigkeitsstrahl eingekoppelt. Die genaue Form der Flüssigkeitskammer, die Flüssigkeitsdüse, Gaseinlass und Gasdüsen können in unterschiedlichen Arten gestaltet sein und sind nicht Teil dieses Dokuments. Das Resultat dieser Bauteile ist aber ein Flüssigkeitsstrahl 1 welcher sich als Lichtleiter eignet.

Der Flüssigkeitsstrahl 1 wirkt wie eine optische Faser und führt den Lichtstrahl. Wenn der Flüssigkeitsstrahl 1 wie in Fig.1a in Tröpfchen zerfällt, koppelt das Licht aus und es gibt praktisch keine Reflexionen zurück zur Flüssigkeitskammer. Trifft der Flüssigkeitsstrahl 1 auf eine Kante wie in Fig. 1b, so koppelt das Licht wegen der Ablenkung ebenfalls aus und es gibt kaum Rückwärtsreflexionen.

Trifft der Flüssigkeitsstrahl 1 aber eine reflektierende Fläche 3, so wird ein Grossteil des eingekoppelten Lichts reflektiert und gelangt über den Flüssigkeitsstrahl 1 zurück zur Flüssigkeitskammer 14. Dort koppelt das Licht aus der Flüssigkeit aus und trifft, nun von unten, auf den halb-durchlässigen Spiegel 13. Dieser lenkt das reflektierte Messlicht durch eine leere Öffnung im Filterrad 10 auf eine Linse 15, die es wiederum auf einen Photodetektor 16 (zum Beispiel eine Photodiode) fokussiert. Das Filterrad 10 kann in dieser Position auch mit einem Filter ausgerüstet sein, der zum Beispiel Streulicht minimiert oder die Messelektronik schützt.

Der Photodetektor 16 ist an eine Elektronik 17 angeschlossen. Über diese kann in der vorliegenden Variante ausserdem das Filterrad 10 gesteuert werden. Das Filterrad 10 ist im Messmodus und im Bearbeitungsmodus in die jeweils passende Stellung zu bringen. Alternativ können Spannungsversorgung, Ausleseelektronik, Speicher, Steuerung des Sensors und des Filterrades aber auch getrennt und an verschiedenen Orten untergebracht werden oder durch andere Mechanismen ermöglicht werden. Das Ausleseverfahren kann zum Beispiel einfach das Überschreiten eines Schwellenwerts feststellen oder den Signalspannungsverlauf aufnehmen. Es ist aber auch möglich Laufzeitanalysen bei gepulsten Lasern durchzuführen oder mit einem Lock-In-Amplifier und einer gepulsten Lichtquelle zu arbeite um Streulichteffekte zu minimieren.

In dem Fall, dass ein Bearbeitungslaser als Messlaser dienen soll, ist in der einfachsten Form das Filterrad 10 mit einem stark abschwächenden Filter und einem offenen Durchlass oder einem Filter für das Spektrum der Lichtquelle ausgerüstet ("klar"). Natürlich können nach Bedarf weitere Filter verwendet werden.

Im Messmodus wird das Laserlicht nach der Aufweitung durch den stark abschwächenden Filter auf eine gewünschte Leistung abgeschwächt. Vor dem Photodetektor 16 ist in dieser Situation dann die offene Position oder ein klarer Filter. Der Photodektektor 16 erhält damit eine möglichst grosse Menge an reflektiertem Licht und der Kollisionsgegenstand 2 wird vor Beschädigung durch den Laser geschützt.

Im Bearbeitungsmodus wird das Filterrad 10 um 180° gedreht. Nun tritt der Laser unabgeschwächt auf das Werkstück 6. Das bei der Bearbeitung entstehende reflektierte Licht wird durch den Filter daran gehindert, in voller Intensität auf den Photodetektor 16 zu treffen wodurch dieser geschützt wird.

Wird die Abschwächung nicht mit dem Filter, sondern mit dem Spiegel 13 durchgeführt, so muss dieser im Bearbeitungsmodus aus dem Strahlengang genommen werden, um den Detektor 16 zu schützen oder es muss ein entsprechend robuster Detektor sein 16. Je nachdem könnte es nötig sein, auch den Laser selbst oder die Optik vor den Reflektionen zu schützen.

Wird mit einer Lichtquelle 8 von so geringer Leistung gemessen, dass keine Schäden an dem Kollisionsgegenstand 2 entstehen können, so kann ganz auf eine Abschwächung verzichtete werden. Der gesamte Messaufbau oder zumindest die Detektoreinheit sollte im Bearbeitungsmodus z.B. durch eine Blende abgekoppelt werden, wenn der Detektor nicht robust genug ist, um allfällige Reflektionen schadlos zu überstehen.

Natürlich sind auch andere optische Systeme denkbar. Es können zum Beispiel auch geeignet geformte Spiegel genutzt werden, um einen Teil der Linsen zu ersetzen. Anstelle von einem halb-durchlässigen Spiegel könnte ein geeignetes Primas welches zum Beispiel geeignet beschichtet ist, verwendet werden. Auch müssen weder Filter verwendet werden noch müssen diese auf einem Rad montiert sein. Es wären zum Beispiel auch ein oder mehrere Schieber denkbar. Filter könnten wiederum durch halbdurchlässige Spiegel oder Prismen ersetzt werden. Auch kann ein Laser mit verstellbarer Leistung genutzt werden. Der Strahlengang kann so angepasst werden, dass die Bauteile in einer anderen Anordnung zueinander sind.

Mit einem geeigneten Aufbau (schnell gepulster Laser, genügend empfindlicher Detektor und genaue Zeiterfassung) lassen sich auch die flüssigkeitsstrahlinternen Reflektionen vermessen und zwar auch deren Position. Damit lässt sich der Unterschied zwischen den drei Zuständen des Flüssigkeitsstrahls 1 auch ohne reflektierende Flächen 3 erkennen und man gewinnt die Distanzinformation.

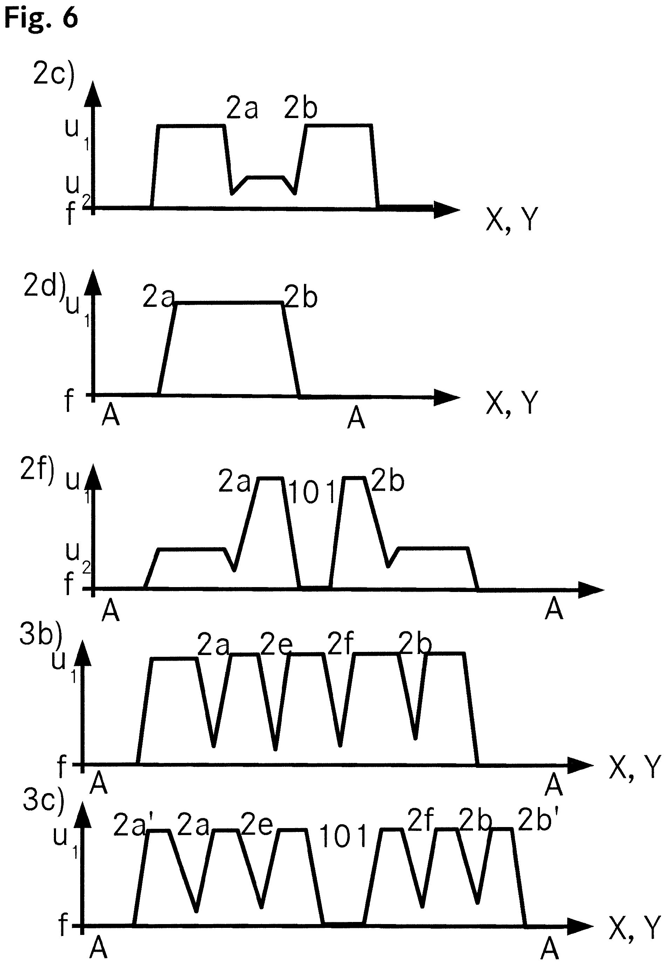

Figur 6 zeigt mögliche Messreihen für den Fall, dass eine Messung mit Reflektionsbeobachtung gemacht wird.

Dabei wird davon ausgegangen, dass der Flüssigkeitsstrahl entlang der Line A-A in der Figur 2 über den Kollisionsgegenstand 2 geführt wird. Die hier betrachteten Kollisionsgegenstände sind solche mit reflektierenden Flächen3.

Es sind fünf theoretische Verläufe gezeigt. Auf der x-Achse ist die Konstellation bei einer Verschiebung (entlang von A-A) eingetragen. Auf der y-Achse ist das Signal des Photodetektors gezeigt. Die Nummern geben das jeweilige Ausführungsbeispiel aus Fig. 2 und Fig. 3 an. Es gibt drei Signallevel:

f: praktisch kein Signal (freier Flüssigkeitsstrahl 1);

u1: starkes Signal (ungestörter Flüssigkeitsstrahl 1 auf reflektierender Fläche 3);

u2: schwaches Signal (ungestörter Flüssigkeitsstrahl auf wenig reflektierender Fläche).

Berührt der Flüssigkeitsstrahl eine Kante, so sinkt das Signal auf einen tiefen Wert. Dadurch lassen sich die Konstellationen der Kanten sehr genau ausmessen.

Die Messreihen sind für quasi-kontinuierliche Messungen gezeigt. Damit sind Messungen gemeint in denen das Signal in, im Vergleich zur Geschwindigkeit der Relativbewegung, sehr kurzen Abständen aufgenommen bzw. ausgelesen wird. Es ist natürlich auch möglich, die Kantenpositionen in einem iterativen Verfahren zu messen. Dabei wird wiederholt festgestellt, auf welcher Seite einer Kante 2x sich der Flüssigkeitsstrahl 1 befindet und eine nächste Messstelle innerhalb des Intervalls zwischen zwei Messungen mit unterschiedlichem Ergebnis gewählt. Dieser Messwert begrenzt dann das Intervall für die Wahl des nächsten Punktes bis die Position mit der gewünschten Genauigkeit bekannt ist. Die Relativbewegung muss nicht auf geraden Linien erfolgen. Es sind alle möglichen Abtastmuster denkbar, solange die entscheidenden Kanten gekreuzt werden. Und jedes dieser Abtastmuster kann quasi-kontinuierlich oder diskret gemessen werden. Auch kann die Messung während einer kontinuierlichen Bewegung oder im Stillstand geschehen. Auch eine beschleunigte Bewegung ist denkbar, aber schwieriger in der Auswertung. Ist die Bewegung allerdings so schnell, dass der Flüssigkeitsstrahl 1 nicht mehr als gerade angesehen werden kann, so wird die Auswertung komplexer und es muss zusätzliches Wissen über die Ausbreitungsrichtung FS des Strahls 1 gewonnen werden. Ist die Bewegung noch schneller, kann es passieren, dass sich kein intakter Flüssigkeitsstrahl 1 in ausreichender Länge bilden kann. Unter diesen Umständen kann die Messung nicht mehr durchgeführt werden.

Der Flüssigkeitsstrahl kann auch durch äussere elektromagnetische Felder abgelenkt werden, falls er elektrisch geladen oder stromdurchflossen ist. Auch Gasdruck kann den Strahl verformen. Ähnliches kann passieren, wenn die Strahlausbreitungsrichtung FS nicht parallel zur Gravitation ist. In all diesen Fällen muss die Kurve, die der Strahl in seiner Ausbreitungsrichtung beschreibt, bestimmt werden.

In den Figuren 7a bis 7e wird erläutert, auf welche Weise die Winkellage des Flüssigkeitsstrahls, also der Strahlwinkel 32 und der Einfallswinkel 31, ermittelt werden können. Wie schon in der Beschreibung zu Figur 3 erwähnt, wird hier nur ein Beispiel betrachtet und zwar das eines Kollisionsgegenstands 2 mit drei Messkanten 2a, 2e und 2f in zwei Kantenebenen KE1 und KE2. Der Kollisionsgegenstand 2 ist als ortsfest angenommen, und der Flüssigkeitsstrahl 1 wird in diesem Beispiel bewegt. Die Relativbewegung des Flüssigkeitsstrahls 1 wird gemessen. Auch wird nur die Bewegung in einer Dimension betrachtet. Die anderen Winkel (32.2 und 31.2) können analog gemessen und berechnet werden. Auch die Fälle, in den sich der Kollisionsgegenstand 2 bewegt und der Flüssigkeitsstrahl 1 feststeht und die Fälle, in denen beides bewegt wird, sind analog auszuwerten. Des Weiteren sei betont, dass die hier beschriebenen Winkel und Ebenen in gewisser Weise willkürlich gewählt sind. Sie sollen dazu dienen, naheliegende Koordinatensysteme ineinander umzurechnen bzw. die relative Lage von Kollisionsgegenstand 2 und Flüssigkeitsstrahl 1 zu beschreiben. Dazu gehören zum Beispiel ein durch den Kollisionsgegenstand 2 definiertes, ein durch den Strahl 1 definiertes oder ein durch die Bewegungsebene des flüssigkeitsstrahlerzeugenden Elements BE_D definiertes Koordinatensystem.

In Figur 7a ist die Situation skizziert und die bekannten und gesuchten Grössen markiert. Die drei Punkte 2a, 2e und 2f markieren die Kanten des Kollisionsgegenstandes 2. Die durch diese Punkte verlaufenden beiden gestrichelten Linien sind die beiden parallelen Kantenebenen KE1 und KE2. Die gepunktete Linie verbindet zwei der Kanten 2a und 2e auf den unterschiedlichen Kantenebenen KE1 und KE2 miteinander. Die Normale N der Kantenebenen KE1 und KE2 ist als Vektor in Figur 7a eingezeichnet. Die grob gestrichelte Linie ist die Bewegungsebene des strahlerzeugenden Elements BE_D. Die drei parallelen, gepunktet-gestrichelten Linien repräsentieren den Flüssigkeitsstrahl FS1-FS3 zum Zeitpunkt der Berührung jeweils einer der Kanten 2a, 2e, 2f.

Da der Kollisionsgegenstand 2 gut vermessen ist, sind die Kantenabstände in der Kantenebene KE1 oder KE2 (22a und 22b) und der Abstand 21 der Kantenebenen KE1 und KE2 bekannt. Die Messung ergibt die Längen der Verschiebungen des Strahls entlang der Bewegungsebene BE_D (23a und 23b). Gesucht sind zum einen der Einfallswinkel (Winkel zwischen N und Flüssigkeitsstrahl FS) 31 und zum anderen der Strahlwinkel (Winkel vom Flüssigkeitsstrahl FS zur Bewegungsrichtung BE_D) 32. Mit Hilfe dieser beiden Winkel lässt sich dann auch der Winkel zwischen der Bewegungsebene BE_D und der Kantenebene KE beschreiben: 90°+'31'-'32'.

Die folgenden Abbildungen illustrieren nun, wie man diese beiden Winkel aus den gegebenen Informationen gewinnen kann:

In dem in Figur 7b gezeigten Dreieck lässt sich der Winkel 33 und die Länge 24 durch den Tangens und den Satz von Pythagoras aus den beiden bekannten Abständen 21 und 22a bestimmen.

In Figur 7c wurde ein Dreieck durch die Parallelverschiebung von 23a erzeugt. Die Länge 24 ist aus Figur 7b bekannt. Der Winkel 34 ist gleich '34'='33'-'31'. Man vergleiche dazu die Winkel an der Kante 2e in den Figuren 7b und 7c. Der Winkel 32 ist einer der gesuchte Strahlwinkel. Mit dem Sinussatz folgt:

$$\frac{\sin('34')}{\sin('32')} = \frac{'23a'}{'24'}$$

Damit hat man einen ersten Zusammenhang zwischen dem Einfallswinkel 31 und dem Strahlwinkel 32.

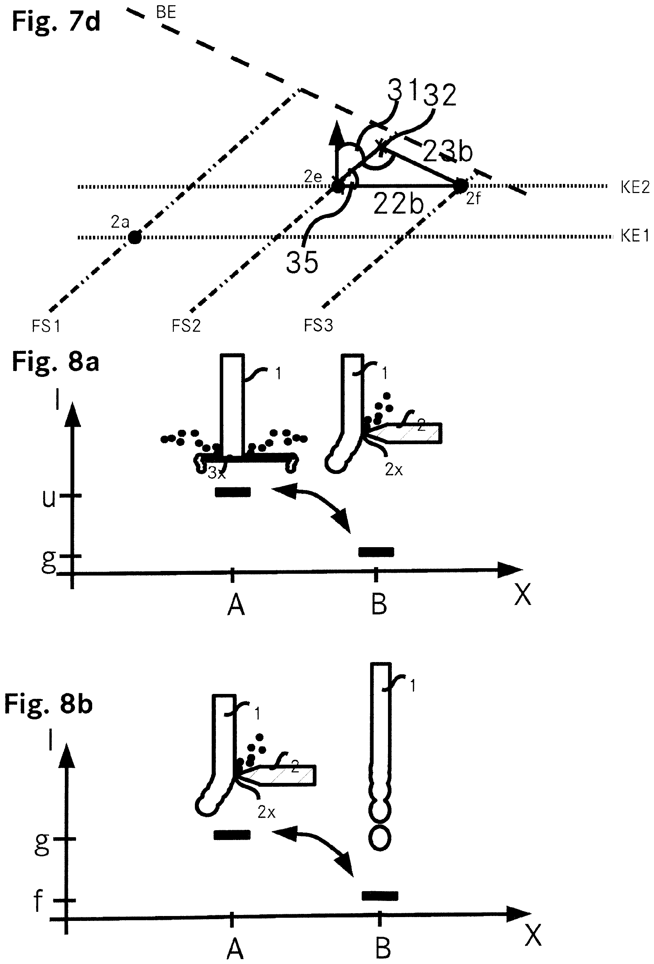

In Figur 7d wird ein weiteres Dreieck erzeugt. Diesmal durch eine Parallelverschiebung von 23b. Die beiden Kanten deren Messwerte nun verglichen werden liegen dabei in einer Kantenebene KE2. Vergleicht man dieses Dreieck mit dem aus Figur 7c, so ergibt sich daraus, dass '33'=90° ist und '24'='22b' also gleich dem Abstand der beiden Kanten in einer Kantenebene. Der gemessene Abstand ist nun '23b'. Also folgt:

$$\frac{\cos('33')}{\sin('32')} = \frac{'23b'}{'22b'}$$

Damit sind nun zwei Ausdrücke für die zwei unbekannten Winkel gegeben und damit ist eine eindeutige Lösung für beide Winkel möglich.

Es ist selbstverständlich auch möglich, dass alle drei Kanten 2a, 2e und 2f auf unterschiedlichen Ebenen KE1-KE3 liegen: Dann wird zweimal das allgemeinere Verfahren von Figur 7c angewendet. Das kann auch gemacht werden indem beide Kanten 2e und 2f der zweiten Kantenebene KE2 jeweils mit der Kante 2a der ersten Kantenebene KE1 verglichen werden.

In Figur 8a und 8b sind die Messungen nochmals erläutert: In 8a wird der Übergang von dem Strahlzustand "ungestört" (Position A) zum Strahlzustand "gestört" (Position B) gezeigt. Auf der x-Achse ist die Konstellation bei Verschiebung X aufgetragen. Auf der y-Achse ist die Intensität I eines beliebigen Sensorsignals gegeben. Der Sensor misst zwei Werte: Der Wert u zeigt den ungestörten Zustand an und der Wert g den gestörten. Es hängt von dem verwendeten Sensor und der gemessen Grösse ab, ob u grösser als g ist oder umgekehrt. Hier ist nur ein Beispiel gezeigt.

Die Messung verläuft nun folgendermassen: Es wird ein Zustand festgestellt. Das könnte entweder "ungestört", "gestört" oder "frei" sein. Es wird entweder ein Sensor verwendet der alle drei Zustände unterscheiden kann, oder einer der nur zwei Zustände unterscheiden kann. Nutzt man einen Sensor der nur zwei Zustände unterscheiden kann (z.B. "ungestört" und nicht "ungestört"), so ist es nötig, die Konstellationsänderung so genau zu kennen, dass die gemessenen Änderungen Messstellen zugeordnet werden können.

Nun wird die Konstellationsänderung vorgenommen. Es kann entweder der Kollisionsgegenstand oder der Flüssigkeitsstrahl oder beides gegeneinander verschoben werden. Es ist auch vorstellbar, dass eine Konstellationsänderung durch ein Verkippen oder Verdrehen von Kollisionsgegenstand, Flüssigkeitsstrahl oder beidem erreicht wird. Je nach Messstrategie, können grössere oder kleinere Verschiebungen vorgenommen werden. Die Verschiebung selbst kann, muss aber nicht vermessen werden.

Nach erfolgter Verschiebung wird erneut ein Zustand ("ungestört", "gestört", "frei") des Flüssigkeitsstrahls festgestellt. Wenn ein Zielzustand festgestellt wird, wird die Konstellation vom Flüssigkeitsstrahl erzeugenden Element und der Messkante bestimmt. Das kann entweder durch eine unabhängige Messung geschehen (z.B. mit Laserdistanzmessern), oder indem die Verschiebung beobachtet wurde (z.B. durch das Zählen von Umdrehungen von Schrittmotoren). In einer bevorzugten Ausführungsform wird das Messsystem benutzt, das auch während der Bearbeitung von Werkstücken mit der zu kalibrierenden Maschine benutzt wird.

Der Zielzustand kann je nach Messverfahren und Gegenstand unterschiedliche gewählt sein. Bei einer räumlich kleinen Samplingrate kann es sich zum Beispiel um den Zustand "gestört" handeln. Wird hingegen grob gesampled, kann es passieren dass es keine Messung gibt, die den "gestörten" Zustand erfasst. In diesem Fall kann es nützlich sein, entweder "frei" oder "ungestört" als Zielzustand zu definieren. Auch in dem Fall, dass ein Messverfahren angewendet wird, welches nur "ungestörte" Zustände erkennt, wird der Zielzustand entweder "ungestört" oder nicht-"ungestört" sein. Analoges gilt für Messsysteme die andere Zustände erfassen.

Anstatt, dass die Position der ersten Messung des Zielzustandes genutzt wird, kann auch die letzte Position mit dem Flüssigkeitsstrahl in einem anderen Zustand genutzt werden. Auch der Punkt in der Mitte der Verbindungslinie der beiden Positionen ist eine mögliche Wahl. Die letzten beiden Möglichkeiten erfordern allerdings, dass die Konstellation bei jeder Zustandsmessung bestimmt wird, da ja erst die folgende Messung zeigen wird, ob die aktuelle Position die vor der Zustandsänderung ist.

Der Zielzustand ist der, der an der Messstelle des Kollisionsgegenstandes eingenommen wird. In der Regel ist die Messstelle Teil einer scharfen Kante und damit handelt es sich dann um den Zustand "gestört". Es ist aber auch denkbar, dass die Messstelle eine besonders gut reflektierende Markierung ist. In diesem Fall wäre der Zustand dann "ungestört" und mit maximalem Signal auf einem geeigneten Sensor, Andere Arten von Markierungen sind möglich und können durch andere Arten von Sensoren erkannt werden. Es kann auch sein, dass der Sensor selbst die Markierung darstellt: Ein Drucksensor könnte zum Beispiel den Druck durch den auftreffenden Flüssigkeitsstrahl erkennen.

Je nach Sensor, kann nun entweder direkt der Zustand erfasst werden, oder es wird der erwartete Übergang erfasst. Ein Photosensor der von einer reflektierenden Oberfläche zurück in den Strahl eingekoppeltes Licht messen kann, wird man zum Beispiel mit einem Kollisionsgegenstand mit Kante und reflektierender Fläche und eine Konstellationsänderung einsetzen, so dass der Flüssigkeitsstrahl über den Übergang "Kante des Kollisionsgegenstandes"- "Reflektierende Fläche" läuft. In diesem Fall nimmt der Sensor den Übergang als plötzlichen Abfall oder Anstieg des Signals war. Das ist in Figur 8a) gezeigt.

Ein akustischer Sensor kann z.B. zwischen den Zuständen "gestört" und "frei" unterscheiden. Um einen solchen Sensor zu verwenden, wählt man einen Kollisionsgegenstand mit Kante aber ohne Fläche unterhalb dieser Kante und eine Konstellationsänderung, die den Flüssigkeitsstrahl über den Übergang "keine Begrenzung nach unten bis zum Zertröpfeln" -"Kante" führt. Der Übergang sollte sich wieder in einer plötzlichen Signalveränderung bemerkbar machen, wie sie in Figur 8b) gezeigt ist.

Figur 8a und 8b zeigen digitale Kurven, in denen der Ort in diskrete Schritte unterteilt ist. Es sind aber auch kontinuierliche Messungen möglich oder solche bei denen die Schrittweite klein genug ist, um glatte Übergange zwischen den Zuständen zu erhalten. In diesem Fall muss eine Schwelle festgesetzt werden, um den Übergang als existent zu definieren. Eine solche Schwelle kann entweder ein fester Messwert sein oder aber auch eine definierte Steigung der Signalkurve.

**Patentansprüche**

1. Verfahren zum Bestimmen einer räumlichen Lage eines Flüssigkeitsstrahls (1), insbesondere eines Flüssigkeitsstrahls (1) zum optischen Führen eines Laserstrahls, umfassend die Schritte:

    a. Bereitstellen eines Kollisionsgegenstandes (2) mit einer Messstelle zur Wechselwirkung mit dem Flüssigkeitsstrahl (1),
    b. Erfassen eines Zustands des Flüssigkeitsstrahls (1) in einer ersten Konstellation zwischen Kollisionsgegenstand (2) und Flüssigkeitsstrahl (1),
    c. Ändern der Konstellation, so dass sich der Zustand des Flüssigkeitsstrahls (1) ändert,
    d. Erfassen der Konstellationsänderung zwischen erster und zweiter Konstellation,
    e. wobei die Konstellation die Lage von Flüssigkeitsstrahl (1) und Kollisionsgegenstand (2) relativ zueinander ist.

2. Verfahren nach Anspruch 1, **dadurch gekennzeichnet, dass** der Kollisionsgegenstand (2) mindestens zwei Messstellen für die Wechselwirkung mit dem Flüssigkeitsstrahl (1) aufweist, welche auf unterschiedlichen Ebenen (KEx) liegen, und dass mindestens zwei Konstellationsänderungen ausgeführt werden.

3. Verfahren nach Anspruch 1 oder 2, **dadurch gekennzeichnet, dass** die mindestens eine Konstellationsänderung in einer Richtung ausschliesslich quer zu der Längsachse des Flüssigkeitsstrahls (1) durchgeführt wird.

4. Verfahren nach einem der Ansprüche 1 bis 3, **dadurch gekennzeichnet, dass** zum Bestimmen eines Mittelpunkts oder eines Durchmessers des Flüssigkeitsstrahls (1) der Kollisionsgegenstand (2) zunächst mit einer ersten Messstelle auf einer ersten Seite des Flüssigkeitsstrahls (1) in Wechselwirkung gebracht wird und danach mit einer zweiten Messstelle auf einer zweiten Seite des Flüssigkeitsstrahls (1) in Wechselwirkung gebracht wird.

5. Verfahren nach einem der Ansprüche 1 bis 4, **dadurch gekennzeichnet, dass** zu einer Bestimmung einer Winkellage des Flüssigkeitsstrahls (1), die Konstellation des Flüssigkeitsstrahles (1) in weiteren axialen Positionen des Kollisionsgegenstandes (2) relativ zum Flüssigkeitsstrahl (1) bestimmt werden

6. Verfahren nach einem der Ansprüche 1 bis 4, **dadurch gekennzeichnet, dass** eine Kante des Kollisionsgegenstandes und der Flüssigkeitsstrahl in z-Richtung, welches die Richtung des Flüssigkeitsstrahls ist, gegeneinander verschoben werden bis eine Zustandsänderung des Flüssigkeitsstrahls festgestellt wird.

7. Verfahren nach einem der Ansprüche 1 bis 4, **dadurch gekennzeichnet, dass**

a) eine erste Position in einer ersten Ebene mit konstanter z-Position, das ist die Position in Richtung des Flüssigkeitsstrahls, mit dem Verfahren nach Anspruch 3 festgestellt wird, welche, zusammen mit dem bekannten z, eine zwei- oder dreidimensionale Position sein kann,
b) dann die z-Position geändert wird und
c) die Position in dieser zweiten, zur ersten Ebene parallelen, Ebene vermessen wird und
d) aus den gewonnenen Daten nun die Ausrichtung des Wasserstrahls in zwei oder drei Dimensionen bestimmt wird.

8. Verfahren nach einem der Ansprüche 1 bis 7, **dadurch gekennzeichnet, dass** ein Messlicht, aus einem beliebigen Frequenzbereich des elektromagnetischem Spektrums, in den Flüssigkeitsstrahl (1) eingekoppelt wird und dass zum Bestimmen des Zustands des Flüssigkeitsstrahls (1) eine Rückstreuung, Auskopplung oder Reflexion des Messlichts detektiert wird.

9. Verfahren nach einem der Ansprüche 1 bis 8, **dadurch gekennzeichnet, dass** der Flüssigkeitsstrahl (1) in einer der räumlichen Konstellationen auf eine Referenzfläche trifft, die gegenüber einer Messstelle des Kollisionsgegenstandes (2) in Richtung des Flüssigkeitsstrahls (1) versetzt ist.

10. Verfahren nach Anspruch 9, **dadurch gekennzeichnet, dass** die Referenzfläche Messlicht beim Auftreffen eines intakten Flüssigkeitsstrahls (1) so reflektiert, dass es in den auftreffenden Flüssigkeitsstrahl (1) eingekoppelt bleibt bzw. wird.

11. Verfahren nach einem der Ansprüche 1 bis 10, **dadurch gekennzeichnet, dass** der Zustand des Flüssigkeitsstrahls (1) in regelmässigen zeitlichen Abständen erfasst wird.

12. Verfahren nach Anspruch 1 bis 11, **dadurch gekennzeichnet, dass** der Kollisionsgegenstand (2) fest mit einer Werkstück-Aufspanneinrichtung einer Bearbeitungsmaschine mit flüssigkeitsstrahlgeführtem Laser verbunden wird.

13. Verfahren nach Anspruch 1 bis 12, **dadurch gekennzeichnet, dass** der Kollisionsgegenstand (2) mindestens eine scharfe Kante (2x) als Messstelle aufweist.

14. Verfahren nach einem der Ansprüche 1 bis 13, **dadurch gekennzeichnet, dass** der Flüssigkeitsstrahl (1) in einer der räumlichen Konstellationen durch eine Ausnehmung im Kollisionsgegenstand (2) für den freien Durchtritt des Flüssigkeitsstrahls (1) geführt wird.

15. Vorrichtung zur Durchführung des Verfahrens nach Anspruch 1, umfassend

a) einen Kollisionsgegenstand (2) zum Wechselwirken mit dem Flüssigkeitsstrahl (1),
b) eine Verschiebungsvorrichtung zum Erzeugen einer vorgegebenen Konstellationsänderung zwischen Flüssigkeitsstrahl (1) und Kollisionsgegenstand (2),
c) eine Vorrichtung zum Erfassen eines ersten und zweiten Zustands des Flüssigkeitsstrahls (1) in einer ersten und zweiten räumlichen Konstellation, wobei der erste Zustand verschieden ist vom zweiten Zustand aufgrund einer geänderten Wechselwirkung zwischen Kollisionsgegenstand (2) und Flüssigkeitsstrahl (1), wobei die Konstellation die Lage von Flüssigkeitsstrahl (1) und Kollisionsgegenstand (2) relativ zueinander ist.

16. Vorrichtung nach Anspruch 15, **dadurch gekennzeichnet, dass** sie

a) eine Vorrichtung zum Erzeugen eines Flüssigkeitsstrahls (1), welcher aus einer Flüssigkeitsdüse austritt, und
b) eine Laserstrahleinkopplung zum Einkoppeln eines Laserstrahls in den Flüssigkeitsstrahl (1) aufweist.

17. Vorrichtung nach Anspruch 15 oder 16, **dadurch gekennzeichnet, dass** der Kollisionsgegenstand (2) mindestens eine Kante (2x) aufweist zur Wechselwirkung mit dem Flüssigkeitsstrahl (1).

18. Vorrichtung nach einem der Ansprüche 15 bis 17, **dadurch gekennzeichnet, dass** eine optische Einheit zur Einkopplung von Messlicht in den Flüssigkeitsstrahl (1) vorgesehen ist, so dass der Mess-Lichtstrahl durch den Flüssigkeitsstrahl (1) in der Art eines Wellenleiters geführt wird, und dass der Zustand des Flüssigkeitsstrahls (1) mit einer optischen Messung ermittelt werden kann.

19. Vorrichtung nach einem der Ansprüche 15 bis 18, **dadurch gekennzeichnet, dass** der Kollisionsgegenstand (2) einen platten-oder rahmenförmigen Teil besitzt.

20. Vorrichtung nach einem der Ansprüche 15 bis 19, **dadurch gekennzeichnet, dass** in starrer räumlicher Lage bezüglich des Kollisionsgegenstandes (2) eine reflektierende Oberfläche vorgesehen ist, die zumindest einen Teil des Messlicht-Strahls rückwärts in den Flüssigkeitsstrahl (1) koppeln kann.

21. Vorrichtung nach einem der Ansprüche 15 bis 20, **dadurch gekennzeichnet, dass** der Kollisionsgegenstand zur Bildung mindestens einer mit einem Flüssigkeitsstrahl wechselwirkenden Messstelle eine Oberflächenunstetigkeit aufweist.

**22.** Vorrichtung nach einem der Ansprüche 15 bis 21, **dadurch gekennzeichnet, dass** der bereitgestellte Kollisionsgegenstand ausgerüstet ist, um Zustände des Flüssigkeitsstrahls zu erfassen.

**23.** Verwendung eines Kollisionsgegenstandes (2) mit mindestens einer, mit einem Flüssigkeitsstrahl (1) wechselwirkenden Messstelle, die durch eine Oberflächenunstetigkeit gebildet ist, zur Bestimmung der räumlichen Lage eines Flüssigkeitsstrahls gemäss einem der Ansprüche 1 - 14.

**24.** Verwendung eines Kollisionsgegenstand (2) nach Anspruch 23, **dadurch gekennzeichnet, dass** der Kollisionsgegenstand eine Referenzplatte mit einer reflektierenden Oberfläche, die reflektierend für ein im Flüssigkeitsstrahl (1) geführtes Messlicht ist, und die in Ausbreitungsrichtung des Flüssigkeitsstrahls (1), hinter einer Messebene des Kollisionsgegenstandes (2) liegt, umfasst.

**25.** Verwendung eines Kollisionsgegenstand (2) nach Anspruch 24, **dadurch gekennzeichnet, dass** der Kollisionsgegenstand (2) speziell ausgerüstet ist, um Zustände des Flüssigkeitsstrahls (1) zu erfassen.

## Claims

**1.** A method for determining a spatial position of a liquid jet (1), in particular of a liquid jet (1) for optically guiding a laser beam, comprising the steps:

a. providing a collision object (2) having a measuring point for interacting with the liquid jet (1),
b. detecting a state of the liquid jet (1) in a first configuration between collision object (2) and liquid jet (1),
c. changing the configuration so that the state of the liquid jet (1) changes,
d. detecting the configuration change between the first and second configuration
e. wherein the configuration is the position of liquid jet (1) and collision object (2) relative to each other.

**2.** The method as claimed in claim 1, **characterized in that** the collision object (2) has at least two measuring points for the interaction with the liquid jet (1), which lie in different planes (KEx), and **in that** at least two configuration changes are carried out.

**3.** The method as claimed in claim 1 or 2, **character-**

**ized in that** the at least one configuration change is performed in a direction exclusively transverse to the lengthwise axis of the liquid jet (1).

**4.** The method as claimed in one of claims 1 to 3, **characterized in that**, in order to determine a midpoint or a diameter of the liquid jet (1), the collision object (2) is at first brought into interaction with a first measuring point on a first side of the liquid jet (1), and then it is brought into interaction with a second measuring point on a second side of the liquid jet (2).

**5.** The method as claimed in one of claims 1 to 4, **characterized in that**, in order to determine the angle position of the liquid jet (1), the configuration of the liquid jet is determined in further axial positions of the collision object (2) relative to the liquid jet (1).

**6.** The method as claimed in one of claims 1 to 4, **characterized in that** an edge of the collision object (2) and the liquid jet are displaced relative to each other in the z-direction, which is the direction of the liquid jet (1), until a change in state of the liquid jet is determined.

**7.** The method as claimed in one of claims 1 to 4, **characterized in that**

a) a first position in a first plane with constant z-position, which is the direction of the liquid jet, is ascertained with the method according to claim 3, which, together with the known z, can be a two or three-dimensional position,
b) then the z-position is changed and
c) the position in this second plane, parallel to the first plane, is measured and
d) from the obtained data, the orientation of the water jet in two or three dimensions is then determined.

**8.** The method as claimed in one of claims 1 to 7, **characterized in that** a measurement light of any desired frequency region of the electromagnetic spectrum is coupled into the liquid jet (1) and a back scattering, extraction or reflection of the measurement light is detected in order to determine the state of the liquid jet (1).

**9.** The method as claimed in one of claims 1 to 8, **characterized in that** the liquid jet (1) in one of the spatial configurations impinges on a reference surface, which is offset with respect to a measuring point on the collision object (2) in the direction of the liquid jet (1).

**10.** The method as claimed in claim 9, **characterized in that** the reference surface reflects measurement light upon impingement of an intact liquid jet (1) so that it becomes or remains coupled into the impinging liquid jet (1).

**11.** The method as claimed in one of claims 1 to 10, **characterized in that** the state of the liquid jet (1) is detected at regular intervals of time.

**12.** The method as claimed in claim 1 to 11, **characterized in that** the collision object (2) is firmly connected to a workpiece clamping device of a processing machine with liquid jet-guided laser.

**13.** The method as claimed in claim 1 to 12, **characterized in that** the collision object (2) has at least one sharp edge (2x) as measuring point.

**14.** The method as claimed in one of claims 1 to 13, **characterized in that** the liquid jet (1) in one of the spatial configurations is led through a recess in the collision object (2) for the free passage of the liquid jet (1).

**15.** A device for carrying out the method as claimed in claim 1, comprising

a) a collision object (2) for the interaction with the liquid jet (1),
b) a displacement device for generating a predetermined configuration change between liquid jet (1) and collision object (2),
c) a device for detecting a first and second state of the liquid jet (1) in a first and second spatial configuration, wherein the first state is different from the second state on account of a changed interaction between collision object (2) and liquid jet (1), wherein the configuration is the position of liquid jet (1) and collision object (2) relative to each other.

**16.** The device as claimed in claim 15, **characterized in that** it comprises

a) a device for generating a liquid jet (1) which emerges from a liquid nozzle, and
b) a laser beam coupling unit for coupling a laser beam into the liquid jet (1).

**17.** The device as claimed in claim 15 or 16, **characterized in that** the collision object (2) has at least one edge (2x) for interaction with the liquid jet (1).

**18.** The device as claimed in one of claims 15 to 17, **characterized in that** an optical unit is provided for the coupling of measurement light into the liquid jet (1), so that the measurement light beam is guided through the liquid jet (1) in the manner of a waveguide, and that the state of the liquid jet (1) can be determined with an optical measurement.

**19.** The device as claimed in one of claims 15 to 18, **characterized in that** the collision object has a platelike or framelike part.

**20.** The device as claimed in one of claims 15 to 19, **characterized in that** a reflective surface is provided in rigid spatial position with respect to the collision object (2), which can couple at least a portion of the measurement light beam backward into the liquid jet (1).

**21.** The device as claimed in one of claims 15 to 20, **characterized in that** the collision object (2) comprises a surface irregularity for the formation of at least one measuring point interacting with a liquid jet.

**22.** The device as claimed in one of claims 15 to 21, **characterized in that** the provided collision object is outfitted to detect states of the liquid jet.

**23.** Use of a collision object (2) with at least one, with a liquid jet interacting measuring point, which is formed by a surface irregularity, for determining a spatial position of a liquid jet (1) according to one of claims 1-14.

**24.** Use of a collision object (2) as claimed in claim 23, **characterized in that** the collision object comprises a reference plate with a reflective surface, which is reflective for a measurement light guided in the liquid jet (1) and which lies behind a measurement plane of the collision object (2), looking in the direction of propagation of the liquid jet (1).

**25.** Use of a collision object (2) as claimed in claim 24, **characterized in that** the collision object (2) is specially outfitted to detect states of the liquid jet (1).

**Revendications**

**1.** Procédé de détermination d'une position spatiale d'un jet de liquide (1), en particulier d'un jet de liquide (1) pour le guidage optique d'un faisceau laser, comprenant les étapes suivantes:

a. préparer un objet de collision (2) présentant un point de mesure pour l'interaction avec le jet de liquide (1),
b. détecter un état du jet de liquide (1) dans une première configuration entre l'objet de collision (2) et le jet de liquide (1),
c. changer la configuration, de telle manière que l'état du jet de liquide (1) change,
d. détecter le changement de configuration entre la première et la seconde configuration,
e. dans lequel la configuration est la position du jet de liquide (1) et de l'objet de collision (2) l'un par rapport à l'autre.

2. Procédé selon la revendication 1, **caractérisé en ce que** l'objet de collision (2) présente au moins deux points de mesure pour l'interaction avec le jet de liquide (1), qui sont situés sur des plans différents (KEx), et **en ce que** l'on opère au moins deux changements de configuration.

3. Procédé selon la revendication 1 ou 2, **caractérisé en ce que** l'on effectue ledit au moins un changement de configuration dans une direction exclusivement transversale à l'axe longitudinal du jet de liquide (1).

4. Procédé selon l'une quelconque des revendications 1 à 3, **caractérisé en ce que** pour la détermination d'un centre ou d'un diamètre du jet de liquide (1) on amène l'objet de collision (2) d'abord en interaction avec un premier point de mesure sur un premier côté du jet de liquide (1) et on l'amène ensuite en interaction avec un second point de mesure sur un second côté du jet de liquide (1).

5. Procédé selon l'une quelconque des revendications 1 à 4, **caractérisé en ce que** pour une détermination d'une position angulaire du jet de liquide (1) on détermine la configuration du jet de liquide (1) dans d'autres positions axiales de l'objet de collision (2) par rapport au jet de liquide (1).

6. Procédé selon l'une quelconque des revendications 1 à 4, **caractérisé en ce que** l'on déplace un côté de l'objet de collision et le jet de liquide l'un par rapport à l'autre dans la direction z, qui est la direction du jet de liquide, jusqu'à ce que l'on observe un changement d'état du jet de liquide.

7. Procédé selon l'une quelconque des revendications 1 à 4, **caractérisé en ce que**

a) on détecte avec le procédé selon la revendication 3 une première position dans un premier plan ayant une position z constante, c'est-à-dire la position dans la direction du jet de liquide, qui peut être, avec le z connu, une position bidimensionnelle ou tridimensionnelle,
b) on change ensuite la position z et
c) on mesure la position dans ce second plan, parallèle au premier plan, et
d) à partir des données obtenues, on détermine ensuite l'orientation du jet de liquide dans deux ou trois dimensions.

8. Procédé selon l'une quelconque des revendications 1 à 7, **caractérisé en ce que** l'on injecte dans le jet de liquide (1) une lumière de mesure, située dans un domaine de fréquence quelconque du spectre électromagnétique, et **en ce que** pour la détermination de l'état du jet de liquide (1) on détecte une rétrodiffusion, une sortie ou une réflexion de la lumière de mesure.

9. Procédé selon l'une quelconque des revendications 1 à 8, **caractérisé en ce que** le jet de liquide (1) arrive dans une des configurations spatiales sur une face de référence, qui est déplacée dans la direction du jet de liquide (1) par rapport à un point de mesure de l'objet de collision (2).

10. Procédé selon la revendication 9, **caractérisé en ce que** la face de référence réfléchit la lumière de mesure lors de l'impact d'un jet de liquide intact (1), de telle manière qu'elle reste ou qu'elle soit couplée dans le jet de liquide incident (1).

11. Procédé selon l'une quelconque des revendications 1 à 10, **caractérisé en ce que** l'on détecte l'état du jet de liquide (1) à des intervalles de temps réguliers.

12. Procédé selon les revendications 1 à 11, **caractérisé en ce que** l'objet de collision (2) est fixement relié à un dispositif de serrage de pièce d'une machine d'usinage avec un laser à guidage par jet de liquide.

13. Procédé selon les revendications 1 à 12, **caractérisé en ce que** l'objet de collision (2) présente au moins un côté effilé (2x) comme point de mesure.

14. Procédé selon l'une quelconque des revendications 1 à 13, **caractérisé en ce que** l'on guide le jet de liquide (1) dans une des configurations spatiales à travers un évidement dans l'objet de collision (2) pour le passage libre du jet de liquide (1).

15. Dispositif pour la mise en oeuvre du procédé selon la revendication 1, comprenant:

a) un objet de collision (2) destiné à l'interaction avec le jet de liquide (1),
b) un dispositif de déplacement pour la réalisation d'un changement de configuration prédéterminé entre le jet de liquide (1) et l'objet de collision (2),
c) un dispositif pour la détection d'un premier et d'un second état du jet de liquide (1) dans une première et une seconde configuration spatiale, le premier état étant différent du second état en raison d'une interaction modifiée entre l'objet de collision (2) et le jet de liquide (1), lequel la configuration étant la position du jet de liquide (1) et de l'objet de collision (2) l'un par rapport à l'autre.

16. Dispositif selon la revendication 15, **caractérisé en ce qu'**il présente

a) un dispositif pour produire un jet de liquide (1), qui sort d'une buse à liquide, et
b) un couplage de faisceau laser pour l'injection d'un faisceau laser dans le jet de liquide (1).

17. Dispositif selon la revendication 15 ou 16, **caractérisé en ce que** l'objet de collision (2) présente au moins un côté (2x) pour l'interaction avec le jet de liquide (1).

18. Dispositif selon l'une quelconque des revendications 15 à 17, **caractérisé en ce qu'**il est prévu une unité optique pour l'injection d'une lumière de mesure dans le jet de liquide (1), de telle manière que le faisceau de lumière de mesure soit guidé par le jet de liquide (1) à la manière d'un guide d'onde, et que l'état du jet de liquide (1) puisse être déterminé par une mesure optique.

19. Dispositif selon l'une quelconque des revendications 15 à 18, **caractérisé en ce que** l'objet de collision (2) possède une partie en forme de plaque ou de cadre.

20. Dispositif selon l'une quelconque des revendications 15 à 19, **caractérisé en ce qu'**il est prévu, dans une position spatiale fixe par rapport à l'objet de collision (2), une surface réfléchissante, qui peut coupler au moins une partie du faisceau de lumière de mesure de façon rétrograde dans le jet de liquide (1).

21. Dispositif selon l'une quelconque des revendications 15 à 20, **caractérisé en ce que** l'objet de collision présente une discontinuité de surface pour la formation d'au moins un point de mesure interagissant avec un jet de liquide.

22. Dispositif selon l'une quelconque des revendications 15 à 21, **caractérisé en ce que** l'objet de collision préparé est équipé pour détecter des états du jet de liquide.

23. Utilisation d'un objet de collision (2) avec au moins un point de mesure interagissant avec un jet de liquide (1), qui est formé par une discontinuité de surface, pour la détermination de la position spatiale d'un jet de liquide selon l'une quelconque des revendications 1 à 14.

24. Utilisation d'un objet de collision (2) selon la revendication 23, **caractérisée en ce que** l'objet de collision comprend une plaque de référence avec une surface réfléchissante, qui est réfléchissante pour une lumière de mesure guidée dans le jet de liquide (1), et qui est située dans la direction de propagation du jet de liquide (1) derrière un plan de mesure de l'objet de collision (2).

25. Utilisation d'un objet de collision (2) selon la revendication 24, **caractérisée en ce que** l'objet de collision (2) est spécialement équipé pour détecter des états du jet de liquide (1).

Fig. 1a

Fig. 1b

Fig. 1c

Fig. 2a

Fig. 2b

Fig. 2c

Fig. 2d

Fig. 2e

Fig. 2f

**Fig. 3a**

**Fig. 3b**

**Fig. 3c**

**Fig. 4a**

**Fig. 4b**

**Fig. 5**

# Fig. 6

**Fig. 7a**

**Fig. 7b**

**Fig. 7c**

**Fig. 7d**

**Fig. 8a**

**Fig. 8b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0762947 B1
- EP 1833636 B1
- JP 2009262163 A
- DE 102010011580 A1
- DE 102012003202 A1
- US 2002198515 A1